# EUROPEAN PATENT SPECIFICATION

(11) **EP 2 411 234 B1**
(45) Date of publication and mention of the grant of the patent: **13.08.2014**
(21) Application number: 08876196.0
(22) Date of filing: 16.12.2008
(51) Int. Cl.: B60B 29/00

(54) **FIXING SUPPORT DEVICE AND TIRE/WHEEL ASSEMBLY FIXING METHOD**
ZENTRIER- UND HALTEBOLZEN UND VERFAHREN ZUR RADMONTAGE
DISPOSITIF SUPPORT DE FIXATION ET PROCÉDÉ DE FIXATION D'ENSEMBLE PNEUMATIQUE/ROUE

(43) Date of publication of application: 01.02.2012
(73) Proprietor: Vetys Lizenz-Verwaltungs GmbH, Koeln - Braunsfeld 50825 (DE)
(72) Inventor: NARUSE, Yutaka, Nishi-Tokyo-shi Tokyo 202-0013 (JP)
(74) Representative: Lenzing Gerber Stute
(86) International application number: PCT/JP2008/073264
(87) International publication number: WO 2010/070773

(56) References cited:
- CH-A- 403 519
- DE-A1- 1 936 363
- DE-A1- 4 233 700
- DE-U1- 8 905 120
- DE-U1- 20 014 480
- DE-U1- 29 810 003

## Description

### Technical Field

The present invention relates to a fixing support device used in fixing a tire/wheel assembly to a hub of a vehicle by using multiple hub bolts or the like, and also to a tire/wheel assembly fixing method using the fixing support device.

### Background Art

Heretofore, most vehicles such as four-wheeled automobiles employ a structure in which a tire/wheel assembly (hereinafter referred to as TWA when appropriate) including a tire mounted on a wheel is fixed to an axle, specifically, a hub provided to the vehicle, by using multiple hub bolts (or hub nuts).

In such vehicles, it is important that the axis of an axle (hub) and the rotation axis of the TWA be coincident with each other when the TWA is mounted on the vehicle. In particular, suppose that a TWA is fixed to a hub in a state in which the rotation axis of the TWA is eccentric to the axis of the axle only by a slight amount. In this case, the state causes a vibration while the vehicle is running, specially, at high speed, even if the TWA includes a well-balanced wheel and a tire mounted precisely on a rim.

In this respect, various methods of fixing a TWA to a hub in a state in which the axis of the axle and the rotation axis of the TWA are made coincident with each other have been proposed. For example, a method using a vibrator that provides cyclical vibrations to a TWA while clamping a tire portion of the TWA is known (refer to Patent Document 1). According to such a method, the vibrations provided to the TWA cause the TWA to easily move up, down, left and right at a contact surface of the wheel and a hub bolt (or hub nut) when the TWA is mounted on the hub. It is thus made possible to reduce the possibility that a TWA is fixed to a hub in the state in which the rotation axis of the TWA is eccentric to the axis of the axle. [Patent Document 1] Japanese Laid-Open Patent Publication No. 2001-1964 (on page 3 and Fig. 1)

Documents DE 298 10 003 U1, CH 403 519 A and DE 19 36 363 A1 disclose a tire/ wheel assembly fixing method for fixing a tire/wheel assembly to a hub of a vehicle by using a fixing support device having a screw portion and a wheel guide portion and by using a plurality of fastening devices. These assembly methods are only intended to avoid damages to the threaded portion of the hub and to simplify the wheel mounting and dismounting.

### Disclosure of the Invention

The aforementioned conventional method of fixing a tire/wheel assembly (TWA) to a hub has the following problem, however. In particular, in recent years, there has been a marked tendency that the diameter size of a wheel (or tire) mounted on a vehicle becomes larger along with an improvement in vehicle performance. For this reason, the problem is that it is difficult to manufacture a vibrator for providing a sufficient magnitude of vibrations to facilitate the movement of the TWA that has become heavier along with the increase in the diameter size.

Specifically, in order to provide the sufficient magnitude of vibrations to the TWA that has become heavier along with the larger diameter, the mass of the vibrator itself that clamps the tire portion needs to be increased as well. In essence, the problem is that the aforementioned method cannot be applied to a TWA of a size larger than 16 inches since the sufficient magnitude of vibrations cannot be provided to the TWA, after all, due to the increase in the mass of the vibrator itself.

In addition, in recent years, suspensions of the vehicles have been stiffened in order to secure running stability for an improvement in the running speed of vehicles. Accordingly, there has been an increasing tendency that such stiffened suspensions of vehicles transmit even a little vibration caused by a TWA to the vehicle body. In particular, a majority of complaints about vibrations at tire maintenance shops are in fact ones stemming from the shifting of the rotation axis of a TWA from the axis of an axle.

In this respect, the present invention is made in view of the aforementioned circumstances. An object of the present invention is thus to provide a fixing support device and a TWA fixing method for allowing a TWA to be fixed to a hub of a vehicle in a state in which the axis of an axle and the rotation axis of the TWA are coincident with each other, regardless of a diameter size of the TWA.

### (First Invention)

A first aspect of a first invention is summarized as a tire/wheel assembly (TWA) fixing system for fixing a TWA (TWA 40) including a tire (tire 30) mounted on a wheel (wheel 20) to a hub (hub 50) of a vehicle (automobile 10) by using a fastening device (hub bolt 200, for example), the TWA fixing system including a fixing support device (hub collar 100) attached to the wheel. In the TWA fixing system, the fixing support device includes:
an annular hub ring portion (hub ring portion 110) which fits into a hub hole (hub hole 22) formed in a rotation axis portion (rotation axis portion 21) of the wheel and into which the hub is inserted; and
a hub guide unit (hub guide 120) provided at an inner circumferential surface (inner circumferential surface 110c) of the hub ring portion,
the hub guide unit includes a movable piece (movable piece 121) being biased inward in a radial direction of the hub, being brought into contact with the hub when the hub is inserted into the hub ring portion, and thus being outwardly movable in the radial direction,
a first diameter (diameter Φ11) formed by the movable pieces in a state in which the movable piece is not in contact with the hub is smaller than the diameter (diameter Φ21) of the hub,
a second diameter (diameter Φ12) formable when the diameter formed by the movable pieces is widened by the hub is larger than the diameter of the hub,
the fastening device includes:
   a device-side screw portion (thread portion 240) screwed to a hub-side screw portion (bolt hole 63) formed in the hub;
   a head portion (head portion 210) being continuous with the device-side screw portion and being located outward of the device-side screw portion in a vehicle width direction;
   a wheel fixing portion (wheel fixing portion 230) being positioned between the device-side screw portion and the head portion, and being brought into contact with the periphery of an attachment hole (bolt hole 23) for the vehicle, which is formed in the wheel; and
   a sliding plate portion (sliding plate portion 220) existing between the wheel fixing portion and the head portion and being slidable with respect to the device-side screw portion and the wheel fixing portion, and
   the wheel fixing portion is attached to the device-side screw portion so as to be movable in a direction orthogonal to an axis (axis A10) of the device-side screw portion.

A second aspect of the present invention is summarized as the TWA fixing system according to the first aspect of the present invention, wherein
the movable piece includes an elastic portion (elastic plate unit 121a) continuous with the hub ring portion, and
the elastic portion is located inward of an inner circumferential surface of the hub ring portion in the radial direction of the hub, and biases the movable piece inward in the radial direction of the hub.

A third aspect of the present invention is summarized as the TWA fixing system according to the second aspect of the present invention, wherein a spring constant of the elastic portion is between 0.01mm/10kg to 0.01mm/80kg.

A fourth aspect of the present invention is summarized as the TWA fixing system according to the first to third aspects of the present invention, wherein the first diameter is smaller than the minimum diameter (minimum diameter Φ_{MIN}) including a tolerance of the hub by 0.1mm to 0.2mm.

A fifth aspect of the present invention is summarized as the TWA fixing system according to the first to fourth aspects of the present invention, wherein the second diameter is larger than the maximum diameter (maximum diameter Φ_{MAX}) including a tolerance of the hub by 0.05mm to 0.10mm.

A sixth aspect of the present invention is summarized as the TWA fixing system according to the first to fifth aspects of the present invention, wherein
the wheel fixing portion includes an insertion hole (insertion hole 230a) through which the device-side screw portion is inserted, and
a diameter (diameter (Φ30) of the insertion hole is larger than an outer diameter (outer diameter Φ40) of the device-side screw portion by 0.06mm to 0.15mm.

### (Second Invention)

A first aspect of a second invention is summarized as a tire/wheel assembly (TWA) fixing method for fixing a TWA (TWA 40) including a tire (tire 30) mounted on a wheel (wheel 20) to a hub (hub 50) of a vehicle (automobile 10) by using a fastening device (hub bolt 200), the method including the steps of:
temporarily fixing the TWA to the hub in a state in which the TWA is movable;
inserting a thin plate-like spacer (spacer 310) corresponding to a dimension of a gap formed between a hub hole (hub hole 22) formed in the wheel, which fits into the hub, and the hub; and
inserting the fastening device into an attachment hole for the vehicle, which is formed in the wheel, and then fixing the TWA to the hub by screwing the fastening device to a hub-side screw portion formed in the hub.

A second aspect of the present invention is summarized as the TWA fixing method according to the first aspect of the present invention, wherein in the step of inserting the spacer, a plurality of the spacers are inserted at positions different from each other in the gap.

A third aspect of the present invention is summarized as the TWA fixing method according to the second aspect of the present invention, wherein in the step of inserting the spacer, at least three or more of the spacers are inserted.

A fourth aspect of the present invention is summarized as the TWA fixing method according to the third aspect of the present invention, wherein, in the step of inserting the spacer, the spacers are inserted by using positions on diagonal lines of a polygon as reference points, the polygon being formed by straight lines connecting the attachment holes adjacent to each other or straight lines connecting engagement protrusions adjacent to each other among engagement protrusions for the hub, which are provided on an inner circumferential surface (inner circumferential surface 22a) forming the hub hole.

A fifth aspect of the present invention is summarized as the TWA fixing method according to the second to fourth aspects of the present invention, further including the step of inserting a thickness gauge (thickness gauge) in the gap and then measuring a dimension of the gap by using the thickness gauge. In the TWA fixing method,
in the step of inserting the spacer, the spacer has a thickness substantially half of the dimension of the gap measured in the step of measuring is inserted into the gap.

A sixth aspect of the present invention is summarized as the TWA fixing method according to the first to fifth aspects of the present invention, wherein
broken line-like cut holes (perforated line 300a) are formed on the spacer in a direction intersecting with an axis (axis line A1) of the hub in a state in which the spacer is inserted into the gap, and
the cut holes are positioned between a top end of the hub and an outer surface of the wheel forming the hub hole in the state in which the spacer is inserted into the gap,
the method further including the step of cutting the spacer along the cut holes.

### (Third Invention)

A first, non-claimed aspect of a third invention is summarized as a fixing support device (wheel guide 500, for example) used in fixing a TWA (TWA 40) including a tire (tire 30) mounted on a wheel (wheel 20) to a hub (hub 50) of a vehicle (automobile 10), the device including:
a device-side screw portion (thread portion 510) configured to be screwed to a hub-side screw portion (bolt hole 63) formed in the hub; and
a wheel guide unit (wheel guide unit 520, for example) formed outward of the device-side screw portion in a vehicle width direction with the device-side screw portion being screwed to the hub-side screw portion. In the fixing support device,
the wheel guide unit has an outer diameter (outer diameter Φ50) with which the wheel guide unit is slidable on an inner circumferential surface (inner circumferential surface 23a) of an attachment hole (bolt hole 23) for the vehicle, which is formed in the wheel, and
an axis (axis line A3) of the device-side screw portion and an axis (axis A4) of the wheel guide unit are coincident with each other.

A second, non-claimed aspect of the present invention is summarized as the fixing support device according to the first aspect of the present invention, wherein the outer diameter of the wheel guide unit is smaller than a diameter (diameter Φ60) of the attachment hole, and a difference between the outer diameter of the wheel guide unit and the diameter of the attachment hole is not greater than 0.03 mm.

A third, non-claimed aspect of the present invention is summarized as the fixing support device according to any one of the first and second aspects of the present invention, wherein the wheel guide unit includes:
a guide portion (guide portion 521) having an outer diameter with which the wheel guide unit is slidable on an inner circumferential surface of the attachment hole; and
an extension portion being continuous with the guide portion and being formed outward of the guide portion in a vehicle width direction with the device-side screw portion being screwed to the hub-side screw portion, and
an outer diameter (outer diameter Φ55) of the extension portion is smaller than an outer diameter of the guide portion.

A fourth, non-claimed aspect of the present invention is summarized as the fixing support device according to the second aspect of the present invention, wherein a plurality of the wheel guide units are provided, and outer diameters of the wheel guide units are different from each other.

A fifth, non-claimed aspect of the present invention is summarized as the fixing support device according to the first to fourth aspects of the present invention, wherein an external thread (thread 510a) that is screwed into an internal thread (bolt hole 63) formed in the hub is formed in the device-side screw portion.

A sixth, non-claimed aspect of the present invention is summarized as the fixing support device according to any one of the first and second aspects of the present invention, wherein an internal thread (internal thread 720b) that is screwed onto an external thread formed in the hub-side screw portion (hub bolt 64) is formed in the device-side screw portion.

A seventh aspect of the present invention is a TWA fixing method according to claim 13.

An eighth aspect of the present invention is summarized as the TWA fixing method according to the seventh aspect of the present invention, in which the fixing support device is screwed to each of a plurality of the hub-side screw portions in the step of screwing the fixing support device to the hub-side screw portion.

A ninth aspect of the present invention is summarized as the TWA fixing method according to the eighth aspect of the present invention, wherein the fixing support devices are screwed to the plurality of hub-side screw portions located on diagonal lines with the hub being as the center of the line.

### Brief Description of the Drawings

[Fig. 1] Fig. 1 is an overall schematic perspective view of a TWA 40 according to a first embodiment.
[Fig. 2] Fig. 2 is a view showing a state in which the TWA 40 is mounted on a hub 50 according to the first embodiment.
[Fig. 3] Fig. 3 is an enlarged view of a wheel 20 and a hub collar 100 according to the first embodiment.
[Fig. 4] Fig. 4 is a front view of the hub collar 100 according to the first embodiment.
[Fig. 5] Fig. 5 is a side view of the hub collar 100 according to the first embodiment.
[Fig. 6] Fig. 6 is a cross sectional view of the hub collar 100 taken along the line F6-F6 shown in Fig. 4.
[Fig. 7] Fig. 7 is a side view of a hub bolt 200 according to the first embodiment.
[Fig. 8] Fig. 8 is an exploded perspective view of the hub bolt 200 according to the first embodiment.
[Fig. 9] Fig. 9 is a view showing a relationship of dimensions of the hub 50 and a hub guide 120 according to the first embodiment.
[Fig. 10] Fig. 10 is a flowchart showing an operation flow for fixing the TWA 40 according to the first embodiment to an automobile 10.
[Fig. 11] Figs. 11 are views showing states before and after the TWA 40 is mounted on the hub 50 in the case of the first embodiment.
[Fig. 12] Fig. 12 is a diagram showing a relationship of a diameter of the hub 50 and a diameter formed by movable pieces 121 of the hub guides 120 in the case of the first embodiment.
[Fig. 13] Fig. 13 is a view showing a schematic usage of a hub guide 120A according to a modification example of the first embodiment.
[Fig. 14] Fig. 14 is a front view of a hub collar 100A according to the modification example of the first embodiment.
[Fig. 15] Fig. 15 is a side view of a hub nut 200A according to the modification example of the first embodiment.
[Fig. 16] Figs. 16 are side views of a hub bolt 200B and a hub nut 200C according to another modification example of the first embodiment.
[Fig. 17] Fig. 17 is a perspective view of a spacer roll 300 according to a second embodiment.
[Fig. 18] Fig. 18 is a plan view of a spacer 310 according to the second embodiment.
[Fig. 19] Fig. 19 is an overall schematic perspective view of a thickness gauge 400 according to the second embodiment.
[Fig. 20] Fig. 20 is a flowchart showing an operation flow for fixing a TWA 40 according to the second embodiment to an automobile 10.
[Fig. 21] Fig. 21 is a view showing a state in which three spacers 310 are inserted into a gap formed between a hub hole 22 and a hub 50 in the case of the second embodiment.
[Fig. 22] Fig. 22 is a side view of a wheel guide 500 according to a third embodiment.
[Fig. 23] Fig. 23 is a perspective view of a hole diameter measurement tool 600 according to the third embodiment.
[Fig. 24] Fig. 24 is a flowchart showing an operation flow for fixing a TWA 40 according to the third embodiment to an automobile 10.
[Fig. 25] Fig. 25 is a partial cross-sectional view showing the periphery of a hub 50 immediately before the TWA 40 is mounted on the hub 50 in the case of the third embodiment.
[Fig. 26] Fig. 26 is a partial cross-sectional view showing the periphery of the hub 50 immediately after the TWA 40 is mounted on the hub 50 in the case of the third embodiment.
[Fig. 27] Fig. 27 is a view showing a side view, a plan view and a cross-sectional view of a wheel guide 700 according to a modification example of the third embodiment.
[Fig. 28] Fig. 28 is a view showing a state in which the wheel guide 700 is used according to the modification example of the third embodiment.
[Fig. 29] Fig. 29 is a view showing a side view of a bolt hole measurement tool 650 according to a modification example of the third embodiment.

### Best Modes for Carrying out the Invention

Next, a description will be given of embodiments of the present invention with reference to the drawings. Specifically, first to third embodiments and other embodiments will be described.

In the following description of the drawings, the same or similar portions are denoted by the same or similar reference numerals and symbols. However, the drawings are only schematic, so that it should be noted that dimensional proportions and the like are different from the real ones.

Accordingly, specific sizes and the like should be determined in consideration of the following description. In addition, some portions are different in dimensional relationship and proportions between the drawings as a matter of course.

### [First Embodiment]

In the first embodiment, a description will be given of a tire/wheel assembly (TWA) fixing system including a fixing support device (hub collar) to be attached to a wheel on which a tire is mounted, and a particular fastening device (hub bolt) different from a conventional one.

Specifically, descriptions will be given of (1) a configuration of the fixing system, (2) a configuration of the fixing support device, (3) a configuration of the fastening device, (4) a TWA fixing method and (5) a modification example.

### (1) Configuration of Tire/Wheel Assembly Fixing System

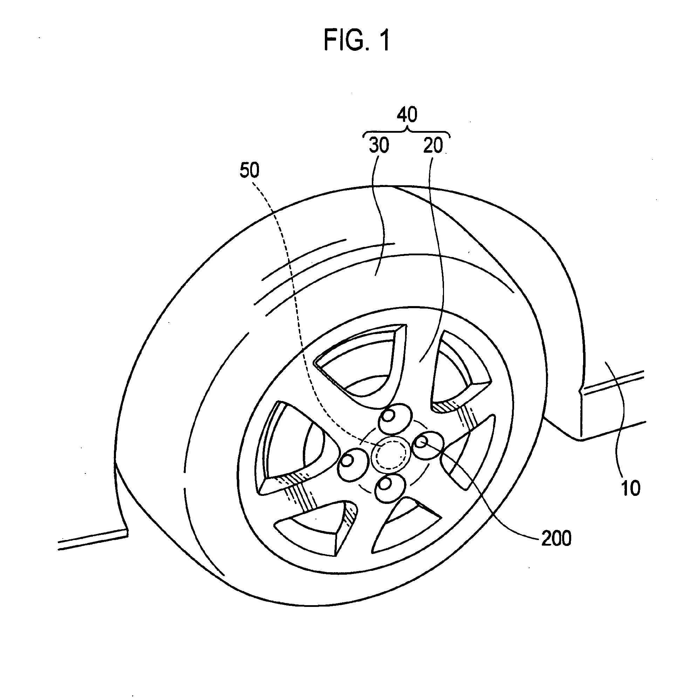

Fig. 1 is an overall schematic perspective view of a tire/wheel assembly (TWA) 40 according to this embodiment. The TWA 40 is an assembly in which a tire 30 is mounted on a wheel 20 made of alloy. The TWA 40 is fixed to a hub 50 of an automobile 10 (vehicle) by use of multiple hub bolts 200 (fastening devices).

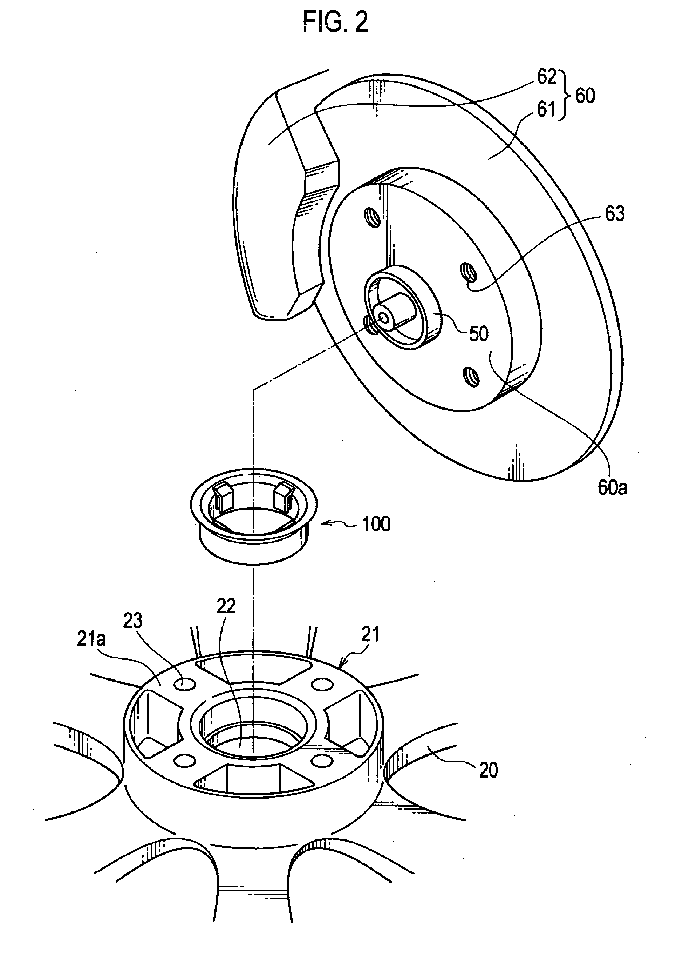

Fig. 2 is a view showing a state in which the TWA 40 is to be mounted on the hub 50. As shown in Fig. 2, a hub collar 100 is attached to the wheel 20. In particular, the hub collar 100 (fixing support device) is fitted into a hub hole 22 formed in the wheel 20.

The TWA 40 including the hub collar 100 fitted thereto is fitted around the hub 50. The hub 50 is provided at the center portion of a disc brake 60. The hub 50 is fitted into the hub hole 22 formed in a rotation axis portion 21 of the wheel 20.

The disc brake 60 includes a disc rotor 61 that rotates together with the hub 50, and a brake caliper 62 that nips the disc rotor 61 and thereby stops the rotation of the disc rotor 61.

Four bolt holes 63 (hub-side screw portions) are formed in the disc rotor 61 in accordance with a specified pitch circle diameter (PCD). Attachment holes of the wheel 20 to the automobile 10, in other words, four bolt holes 23 arranged in accordance with the same PCD as that of the bolt holes 63 are formed in the wheel 20.

When the TWA 40 is attached to the disc brake 60 provided with the hub 50, the hub collar 100 is fitted around the hub 50, and also an inner surface 21a of the wheel 20 is brought into contact with a wheel mounting surface 60a of the disc rotor 61.

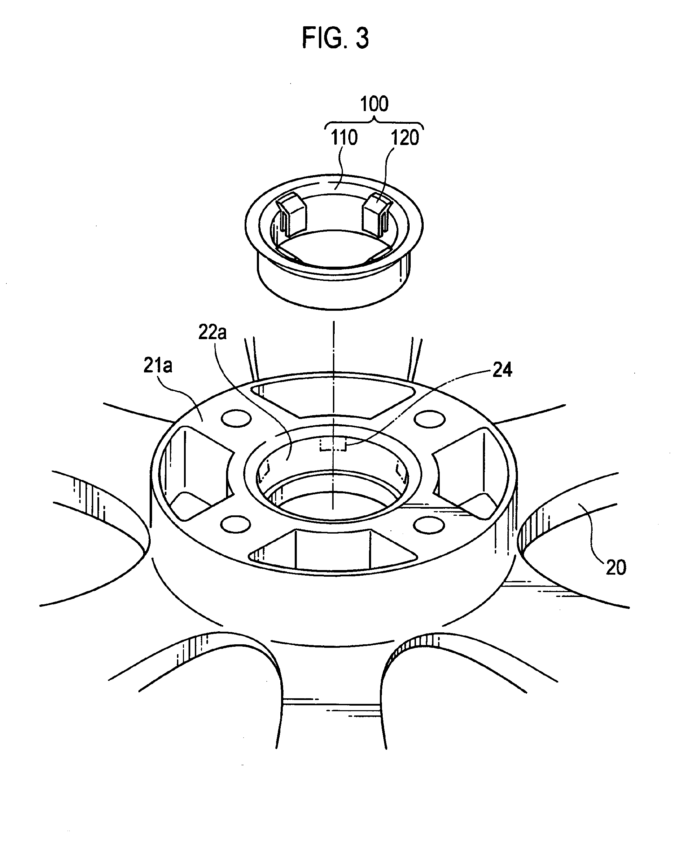

Fig. 3 is an enlarged view of the wheel 20 and the hub collar 100. As shown in Fig. 3, the hub collar 100 includes a hub ring portion 110 of an annular shape and hub guides 120 for guiding a position of the hub 50 (refer to Fig. 2) to be inserted into the hub ring portion 110.

### (2) Configuration of Fixing Support Device

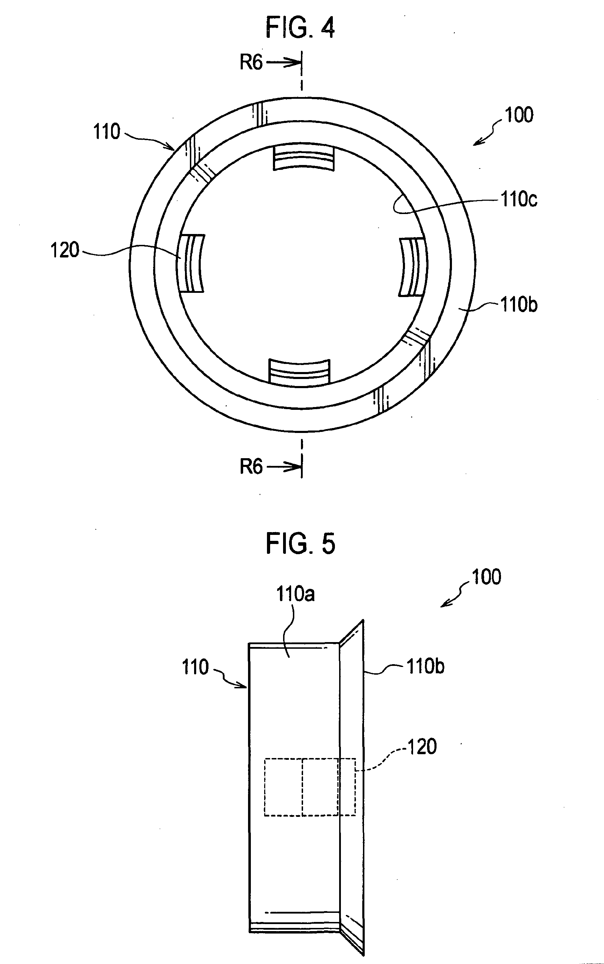

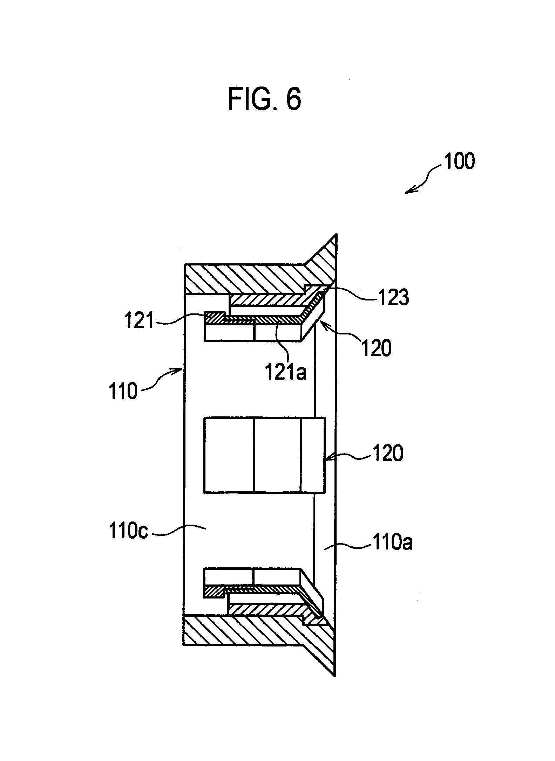

Next, a description will be given of a configuration of the hub collar 100 constituting a fixing support device in this embodiment. Fig. 4 is a front view of the hub collar 100. Fig. 5 is a side view of the hub collar 100. Fig. 6 is a cross-sectional view of the hub collar 100 taken along the line R6-R6 shown in Fig. 4.

### (2.1) Overall Configuration

As shown in Figs. 4 to 6, the hub collar 100 includes the hub ring portion 110 and the hub guides 120. The hub ring portion 110 is of an annular shape. The hub 50 is inserted into the hub ring portion 110. The hub guides 120 are provided to an inner circumferential surface 110c of the hub ring portion 110.

In this embodiment, the hub ring portion 110 and the hub guides 120 are made of metal. Note that the hub ring portion 110 and the hub guides 120 may be made of synthetic resin.

### (2.2) Hub ring portion 110

An outer circumferential surface 110a of the hub ring portion 110 is brought into contact with an inner circumferential surface 22a (refer to Fig. 3) of the wheel 20. Specifically, when the hub collar 100 is fitted into the hub hole 22, the hub collar 100 is attached to the hub hole 22 so as not to fall off the wheel 20.

In addition, the hub collar 100 includes a flange portion 110b. The flange portion 110b is locked by the inner surface 21a of the wheel 20 and prevents the hub collar 100 from entering into the hub hole 22 in a depth greater than a required amount.

### (2.3) Configuration of Hub Guide 120

Multiple hub guides 120 are provided at the inner circumferential surface 110c of the hub ring portion 110. In this embodiment, four pieces of the hub guide 120 are provided. Intervals between adjacent hub guides 120 are all the same. Specifically, the hub guides 120 are provided on the inner circumferential surface 110c at 90-degree intervals.

As shown in Fig. 6, each of the hub guides 120 includes a movable piece 121. The movable piece 121 is biased inward in the radial direction of the hub 50. The movable piece 121 is brought into contact with the hub 50 when the hub 50 is inserted into the hub ring portion 110, and is outwardly movable in the radial direction of the hub 50.

The movable piece 121 includes an elastic plate unit 121a (elastic portion) continuous with the hub ring portion 110. In this embodiment, the elastic plate unit 121a is continuous with the hub ring portion 110 via a base unit 123.

The elastic plate unit 121a is located inward of the inner circumferential surface 110c of the hub ring portion 110 in the radial direction of the hub 50, and biases the movable piece 121 inward in the radial direction of the hub 50.

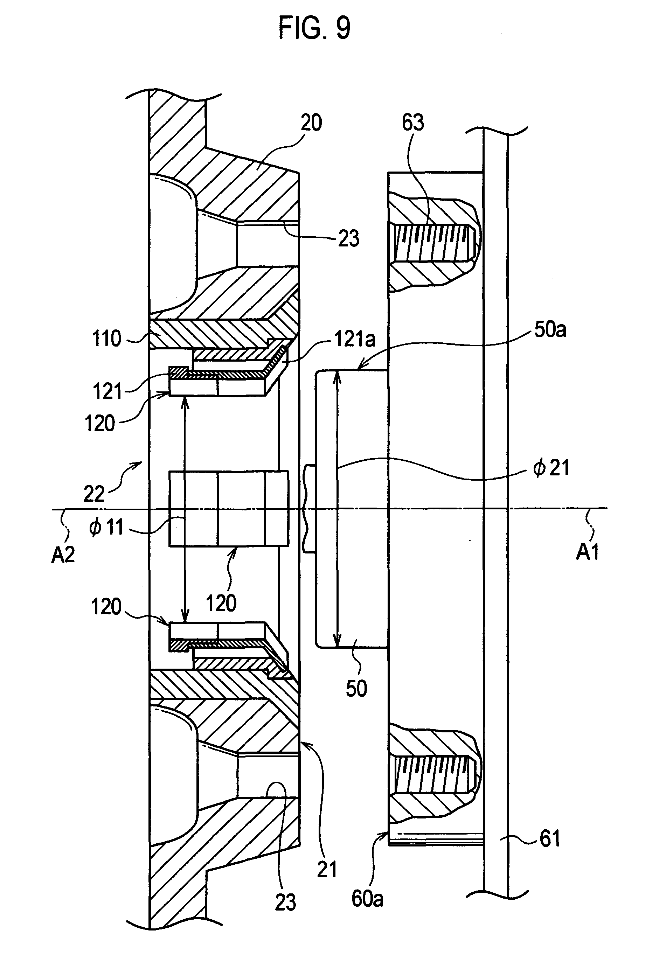

Fig. 9 shows a dimensional relationship between the hub 50 and the hub guides 120. As shown in Fig. 9, in a state where the movable pieces 121 are not in contact with the hub 50, a diameter Φ11 (a first diameter) formed by the movable pieces 121 is smaller than a diameter Φ21 of the hub 50. Specifically, this relationship satisfies a condition that the diameter (the diameter Φ21), of the hub 50, on an insertion side is larger than the diameter (the diameter Φ11) on a receiving side for the hub 50, or that the diameter on the receiving side for the hub 50 is smaller than the diameter on the insertion side.

A spring constant of the elastic plate unit 121a is between 0.01mm/10kg and 0.01mm/80kg. Moreover, the deviation (variation) of spring constants of the four hub guides 120 provided to the hub collar 100 is not greater than 0.01mm/80kg.

### (3) Configuration of Fastening Device

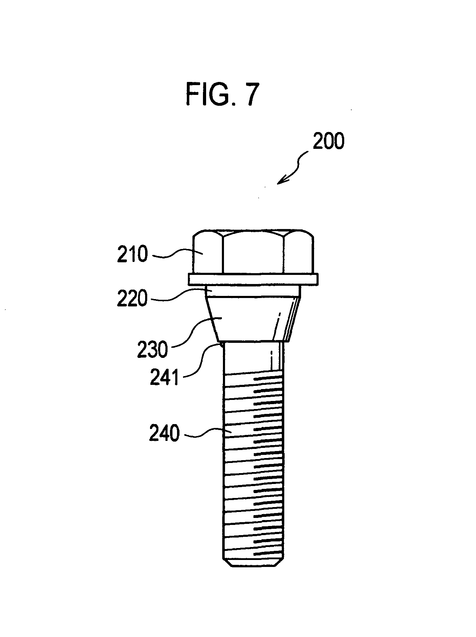

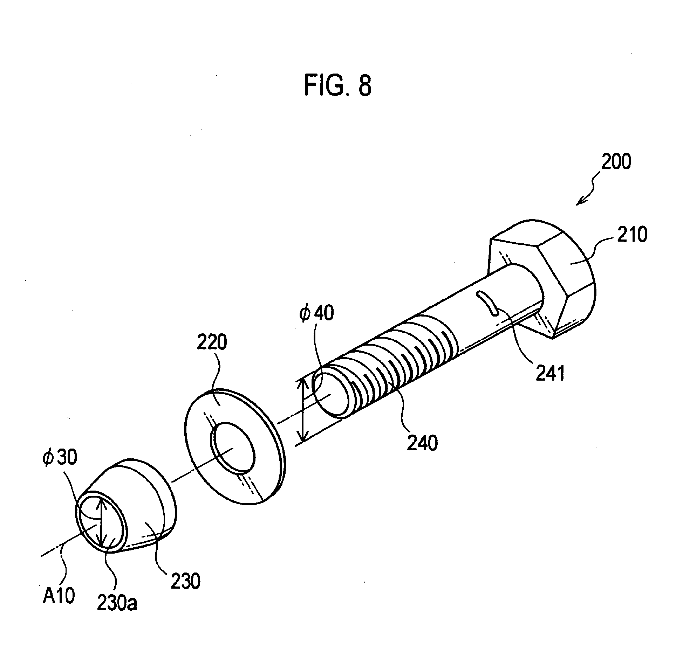

Fig. 7 is a side view of the hub bolt 200 constituting the fastening device in this embodiment. Fig. 8 is an exploded perspective view of the hub bolt 200.

The hub bolt 200 includes a head portion 210, a sliding plate portion 220, a wheel fixing portion 230 and a thread portion 240.

The head portion 210 is continuous with the thread portion 240. When the thread portion 240 is screwed into the bolt hole 63 (refer to Fig. 2), the head portion 210 is located outward of the thread portion 240 in a vehicle width direction.

The sliding plate portion 220 is positioned between the wheel fixing portion 230 and the head portion 210. The sliding plate portion 220 is slidable with respect to the thread portion 240 and the wheel fixing portion 230. Specifically, the sliding plate portion 220 is formed of a material having self-lubricating properties such as PTF resin.

Since the sliding plate portion 220 having the self lubricating properties is placed between the wheel fixing portion 230 and the head portion 210, transmission of the rotation of the head portion 210 and the thread portion 240, which is associated with the screwing of the hub bolt 200 into the bolt hole 63, to the wheel fixing portion 230 is eased. Specifically, it is possible to prevent the TWA 40 precisely centered by the hub collar 100 from moving due to the rotation of the wheel fixing portion 230 when the head portion 210 and the thread portion 240 rotate.

The wheel fixing portion 230 is positioned between the head portion 210 and the thread portion 240. The wheel fixing portion 230 is brought into contact with the periphery of the bolt hole 23 of the wheel 20. In other words, the wheel fixing portion 230 is brought into contact with the wheel 20 and directly fixes the wheel 20 thereto.

The wheel fixing portion 230 is attached to the thread portion 240 so as to be freely rotatable with respect to the thread portion 240. In other words, the wheel fixing portion 230 is attached to the thread portion 240 so as to be movable in a direction orthogonal to an axis A10 of the thread portion 240.

A surface of the wheel fixing portion 230 on the thread portion 240 side and a surface of the head portion 210 on the wheel fixing portion 230 side are orthogonal to the axis A10 of the thread portion 240. For this reason, force in the direction orthogonal to the axis A10 and the rotation direction of the thread portion 240 is not easily generated. Specifically, it is taken into consideration that the force directed in the radial direction of the TWA 40 is not to be generated even in a case where the thread portion 240 is screwed into the bolt hole 63.

The wheel fixing portion 230 includes an insertion hole 230a through which the thread portion 240 is inserted. A diameter Φ30 of the insertion hole 230a is larger than an outer diameter Φ40 of the thread portion 240 by 0.06mm to 0.15mm. In this embodiment, a latch pawl 241 that latches the wheel fixing portion 230 is provided to the thread portion 240 so as to prevent the wheel fixing portion 230 from falling off of the thread portion 240.

The thread portion 240 is screwed into the hub 50, specifically, to the bolt hole 63 formed in the disc rotor 61. In this embodiment, the thread portion 240 configures a device-side screw portion.

### (4) Tire/Wheel Assembly Fixing Method

Next, a description will be given of a method of fixing the TWA 40 to the automobile 10 in the case of this embodiment.

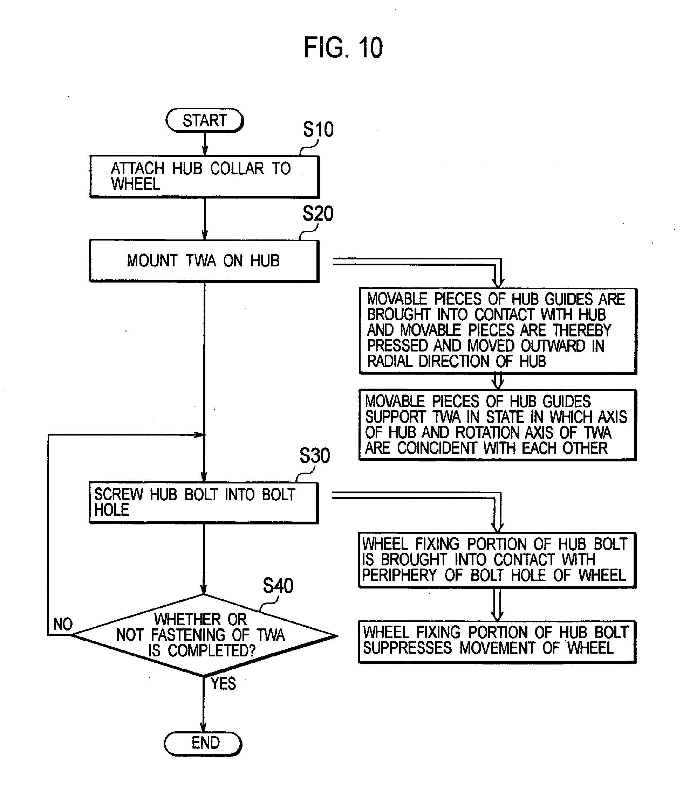

Fig. 10 is a flowchart showing an operation flow for fixing the TWA 40 according to this embodiment to the automobile 10.

In step S10, the hub collar 100 is attached to the hub hole 22 of the wheel 20 (refer to Fig.2).

In step S20, the TWA 40 is mounted on the hub 50 (refer to Fig. 2) provided to the disc rotor 61.

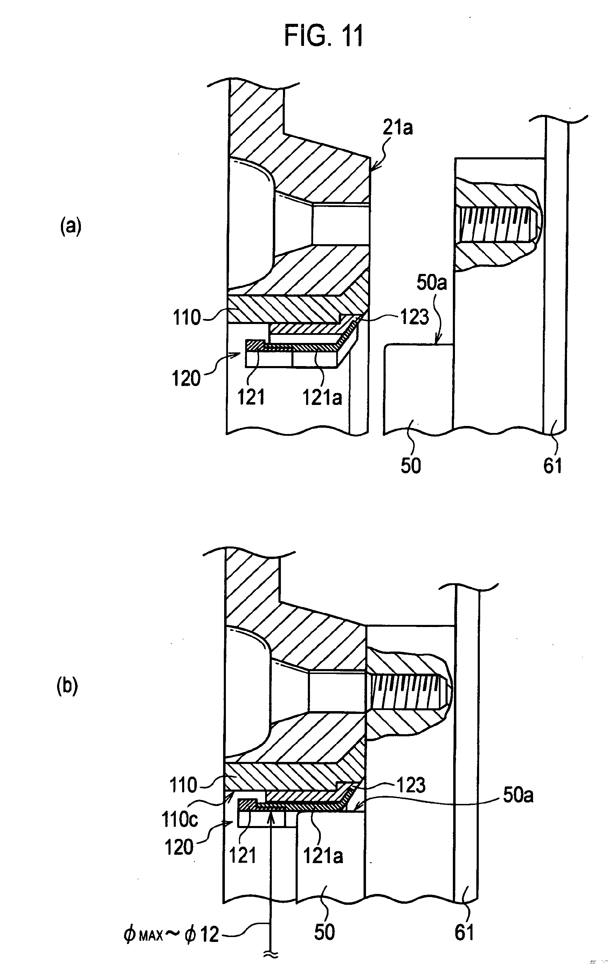

Here, Fig. 11 (a) shows a state before the TWA 40 is mounted on the hub 50. On the other hand, Fig. 11 (b) shows a state after the TWA 40 is mounted on the hub 50. As shown in Figs. 11 (a) and (b), when the TWA 40 is mounted on the hub 50, and when the inner surface 21a of wheel 20 is brought into contact with the wheel mounting surface 60a, an outer circumferential surface 50a of the hub 50 is brought into contact with the elastic plate unit 121a of the movable piece 121. In other words, when the hub 50 is fitted into the hub ring portion 110, the movable pieces 121 are pressed and moved outward in the radial direction of the hub 50 by the hub 50. Specifically, the diameter formed by the movable pieces 121 is widened by the hub 50.

As shown in Fig. 11(b), in the state in which the TWA 40 is mounted on the hub 50, the four hub guides 120 provided to the hub ring portion 110 support the TWA 40 so that a distance between the outer circumferential surface 50a of the hub 50 and the inner circumferential surface 110c of the hub ring portion 110 can be uniform on the circumference of the hub ring portion 110. Specifically, the hub guides 120 support the TWA 40 in a state in which an axis A1 of the hub 50 and a rotation axis A2 of the TWA 40 (the hub collar 100) are coincident with each other.

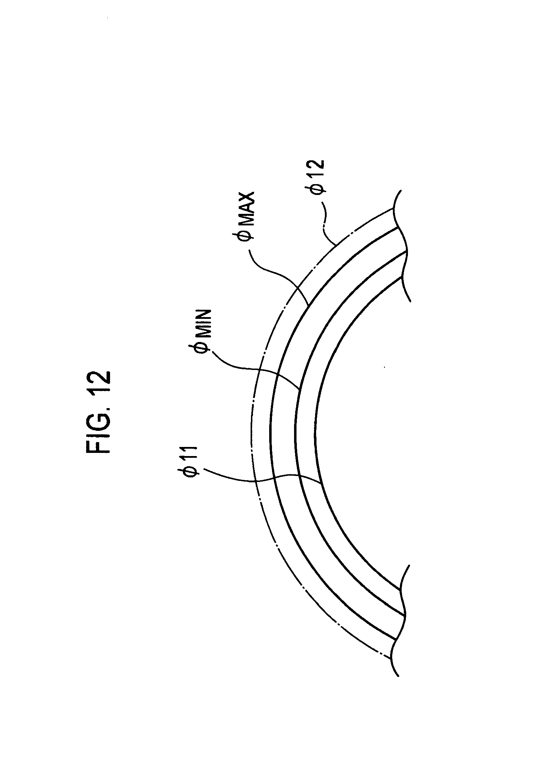

Fig. 12 shows a relationship of the diameter of the hub 50 and the diameter formed by the movable pieces 121 of the hub guides 120. As described above, a diameter Φ12 (a second diameter) formable when the diameter formed by the movable pieces 121 are expanded by the hub 50 is larger than the diameter Φ21 (refer to Fig. 9) of the hub 50.

The diameter Φ11 formed by the movable pieces 121 in a state in which the movable pieces 121 are not in contact with the hub 50 is smaller than the minimum diameter Φ_{MIN} by 0.1mm to 0.2mm, the minimum diameter Φ_{MIN} including the tolerance of the hub 50. On the other hand, the diameter Φ12 formable is larger than the maximum diameter Φ_{MAX} by 0.05mm to 0.10mm, the maximum diameter Φ_{MAX} including a tolerance of the hub 50.

As shown in Fig. 10, thereafter, in step S30, the hub bolts 200 are respectively screwed into the bolt holes 63 formed in the disc rotor 61. When the hub bolt 200 is screwed into the bolt hole 63, the wheel fixing portion 230 of the hub bolt 200 (refer to Figs. 7 and 8) is brought into contact with the periphery of the bolt hole 23 of the wheel 20. The wheel fixing portion 230 is configured to be freely movable with respect to the thread portion 240 screwed into the bolt hole 63, specifically, to be movable in a direction orthogonal to the axis A10 of the thread portion 240. This makes it possible to suppress the TWA 40 centered with high accuracy by the hub guides 120 from moving even if the thread portion 240 is screwed into the bolt hole 63.

In step S40, it is checked whether or not the fastening of the TWA 40 to the hub 50 (the disc rotor 61) by use of the multiple hub bolts 200 is completed. In a case where the fastening of the TWA 40 to the hub 50 is completed (YES in step S40), the operation for fixing the TWA 40 to the automobile 10 is completed.

### (5) Modification Example

Next, descriptions will be given of modification examples of the fixing support device and the fastening device according to this embodiment.

### (5.1) Modification Example 1

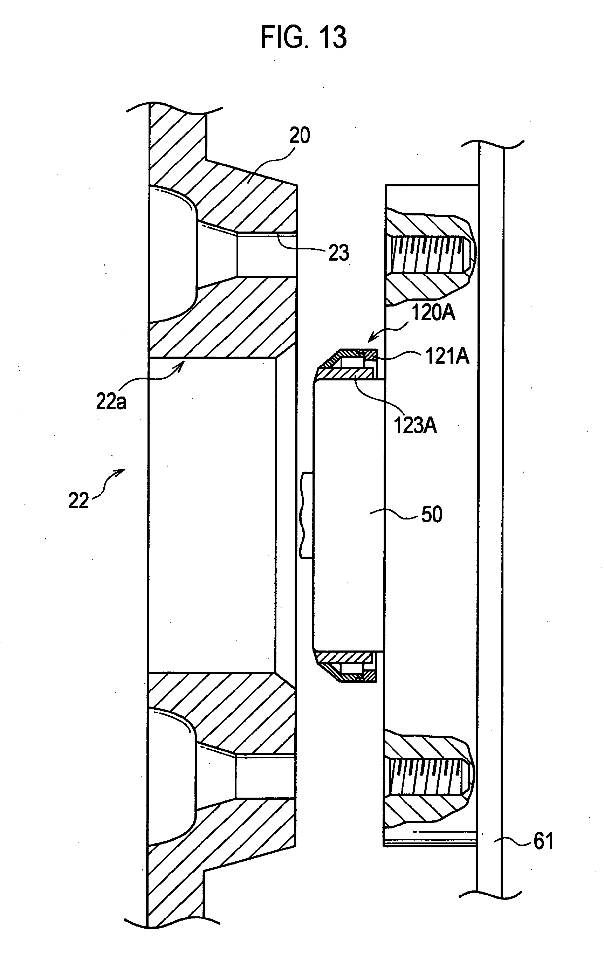

Fig. 13 shows a schematic usage of a hub guide 120A according to a modification example of the fixing support device. As shown in Fig. 13, the hub guide 120A is provided to the hub 50 rather than to the wheel 20. The diameter formed by movable pieces 121A of the hub guides 120A is larger than the diameter of the hub hole 22 of the wheel 20.

When the hub 50 is fitted into the hub hole 22, the movable pieces 121A are brought into contact with the inner circumferential surface 22a of the hub hole 22. The movable pieces 121A are thereby pressed and move inward in the radial direction. As a result, the diameter formed by the movable pieces 121A becomes smaller than the diameter of the hub hole 22. In other words, the hub guides 120A support the TWA 40 so that the distance between the hub 50 and the inner circumferential surface 22a on the circumference of the hub hole 22 can be uniform.

### (5.2) Modification Example 2

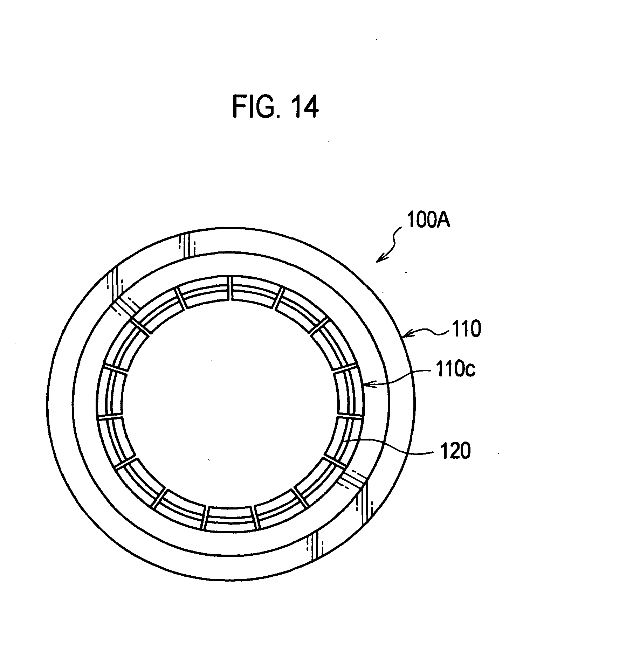

Fig. 14 is a front view of a hub collar 100A according to a modification example of the fixing support device. As shown in Fig. 14, the hub guides 120 are provided to the whole circumference of the inner circumferential surface 110c of the hub ring portion 110 in the hub collar 100A. Note that in the case where the hub guides 120 are provided to the whole circumference of the inner circumferential surface 110c of the hub ring portion 110, the width of each of the hub guides 120 arranged along the inner circumferential surface 110c, that is, the number of hub guides 120 may be changed appropriately in accordance with a material or the like of the hub guides 120.

### (5.3) Modification Example 3

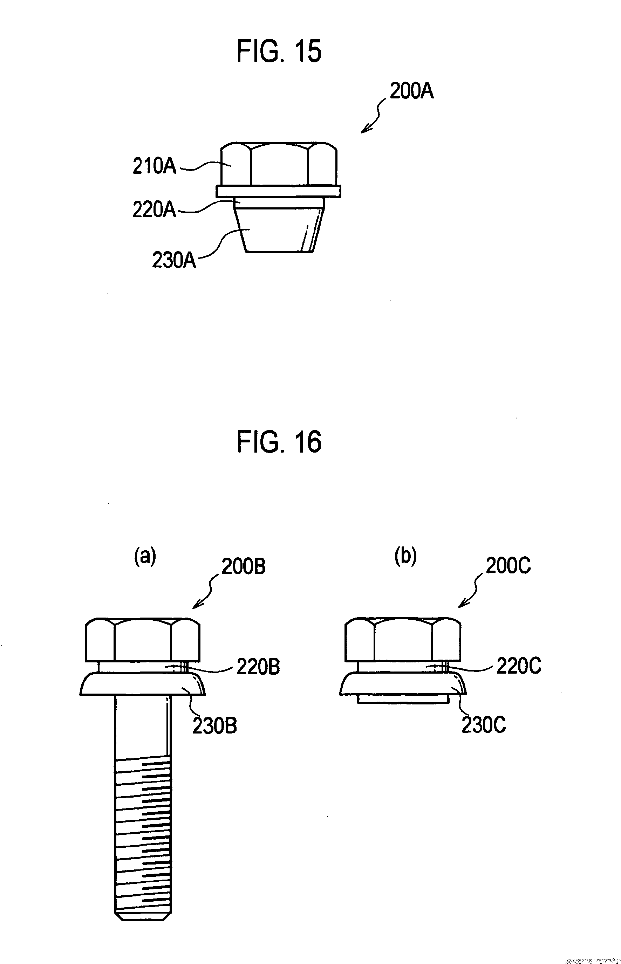

Fig. 15 is a side view of a hub nut 200A according to a modification example of the fastening device. The hub nut 200A is used in a case where hub bolts (not shown) rather than the bolt holes 63 are provided to the disc rotor 61. The hub nut 200A includes a head portion 210A, a sliding plate portion 220A and a wheel fixing portion 230A. The head portion 210A, the sliding plate portion 220A and the wheel fixing portion 230A respectively include the same functions and shapes as those of the head portion 210, the sliding plate portion 220 and the wheel fixing portion 230 of the hub bolt 200.

Figs. 16(a) and (b) are side views of a hub bolt 200B and a hub nut 200C according to another modification example of the fastening device. The hub bolt 200B and the hub nut 200C are employed in a case where the shape of the bolt hole 23 of the wheel 20 is different, that is, in a case where an aluminum alloy wheel not including a taper portion in the bolt hole 23 is used, for example.

A sliding plate portion 220B and a wheel fixing portion 230B of the hub bolt 200B as well as a sliding plate portion 220C and a wheel fixing portion 230C of the hub nut 200C respectively include the same functions and shapes as those of the sliding plate portion 220 and the wheel fixing portion 230 of the hub bolt 200.

### (5.4) Other Modification Examples

Although the hub collar 100 is configured of the hub ring portion 110 and the hub guides 120 in the aforementioned embodiment, the hub collar 100 may be formed by integrating the hub ring portion 110 and the hub guides 120 as a single body.

In the aforementioned embodiment, the wheel 20 and the hub collar 100 are separate components. However, the functions of the hub collar 100 may be incorporated into the wheel 20. In other words, the wheel 20 may be provided as a vehicle wheel including the hub guides 120.

In order for the TWA 40 to be centered with high accuracy, the hub collar 100 and the hub bolts 200 are used in combination in the aforementioned embodiment. However, the accuracy of the centering of the TWA 40 can be improved by using any one of them. In other words, any one of the hub collar 100 and the hub bolt 200 may be used.

### [Second Embodiment]

In a second embodiment, a description will be given of a tire/wheel assembly (TWA) fixing method that can improve the accuracy of the centering of the TWA 40 in an automobile 10 and a wheel 20 in which the aforementioned hub collar 100 cannot be used.

Specifically, the centering of the TWA 40 is realized by inserting a thin plate-like spacer into a gap formed between the hub hole 22 of the wheel 20 and the hub 50.

Note that the same reference numerals will be used below to denote components that are the same as those of the aforementioned first embodiment, and the descriptions and illustration thereof are omitted as appropriate.

### (1) Shape of Spacer

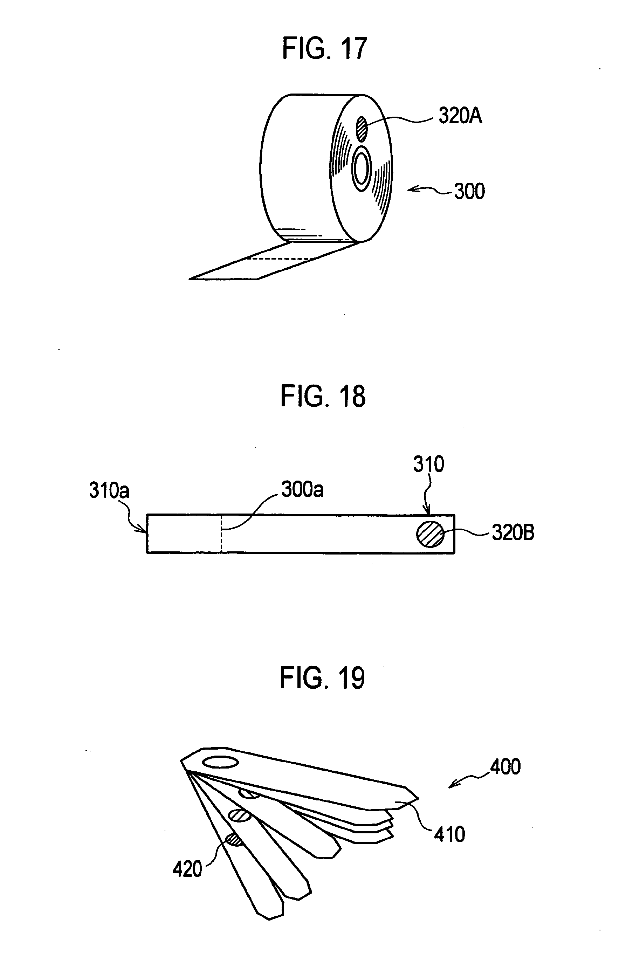

Fig. 17 is a perspective view of a spacer roll 300 used in this embodiment. Fig. 18 is a plan view of a spacer 310 that can be obtained by cutting the spacer roll 300 into a desired length.

A large number of spacer rolls 300 are prepared. The spacer rolls 300 respectively have the spacers 310 of thicknesses different from one another in accordance with the dimension of a gap formed between the hub hole 22 of the wheel 20 and the hub 50. For this reason, a thickness identification mark 320A indicating the thickness of the spacer roll 300 is added to a side surface of each of the spacer rolls 300. Likewise, a thickness identification mark 320B indicating the thickness of the spacer 310 is added to each of the spacers 310.

The width of the spacer 310 is preferably between 5mm and 50mm. In addition, the length of the spacer 310 is preferably between 30mm to 1m. However, the length of the spacer 310 may be 1m or longer. The spacers 310 having thicknesses from 0. 03mm to 0.20mm in unit of 0.01mm are prepared. Specifically, the spacer 310 is a thin plate-like thin piece.

A perforated line 300a is formed on the spacer 310 at a predetermined interval. The perforated line 300a is formed at a position within a range of 15mm to 50mm from an end 310a of the spacer 310 beautifully cut from the spacer roll 300 without having a burr or the like. The perforated line 300a is formed of broken-line-shaped holes for cutting.

The spacer 310 is cut along the perforated line 300a after being inserted into a gap formed between the hub hole 22 and the hub 50.

### (2) Shape of Thickness Gauge

Fig. 19 is an overall schematic perspective view of a thickness gauge 400 used in selecting a spacer 310 having a thickness corresponding to a gap formed between the hub hole 22 and the hub 50.

As shown in Fig. 19, the thickness gauge 400 includes multiple leaves 410 (thin steel pieces).

Specifically, 20 pieces of the leaves 410 having thicknesses from 0.06mm to 0. 40mm in unit of 0.02mm are prepared. An identification mark 420 indicating a thickness is added to each of the leaves 410. The length of the leaf 410 is preferably between 100mm and 150mm. In addition, the width of the leaf 410 is preferably between 5mm and 15mm.

The thickness gauge 400 measures the dimension of a gap formed between the hub hole 22 and the hub 50. The identification mark 420 having the same color (or shape or pattern) as that of the thickness identification mark 320B (thickness identification mark 320A) added to a spacer (spacer roll 300) having half thickness with respect to the thickness of the leaf 410 (0.06mm, for example) is added to the leaf 410. Specifically, since the wheel 20 temporarily fixed to the hub 50 in a loose manner moves down due to its weight in a vertical direction, if a gap formed between the hub hole 22 and the hub 50 is measured at a lower side in the vertical direction, the dimension of the gap becomes twice as thick as a gap to be actually filled with the spacer 310. While taking such a factor into consideration, the thickness of the spacer 310 is set to half of the thickness of the leaf 410.

### (3) Fixing Method

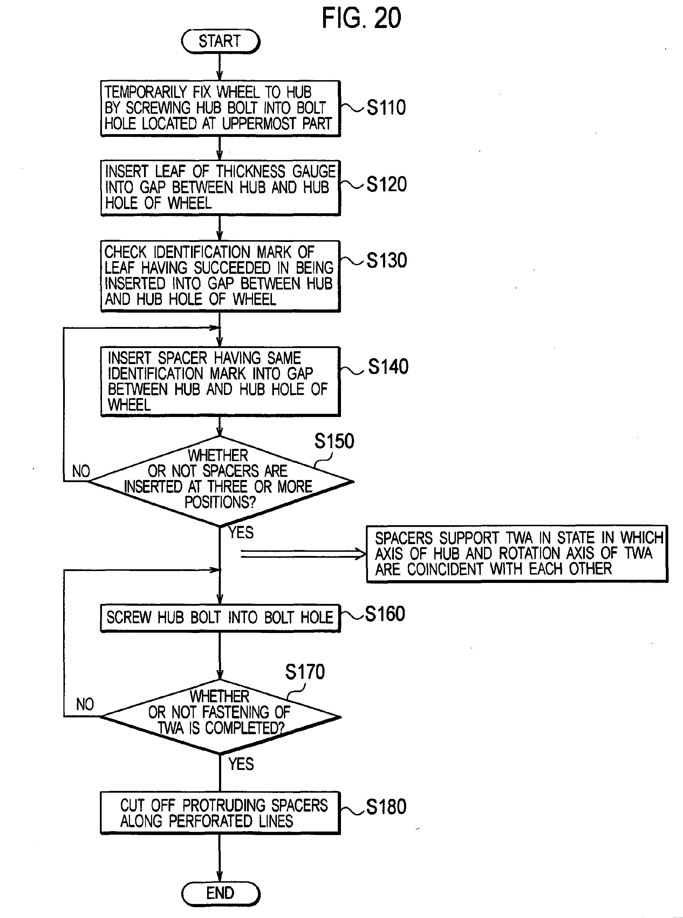

Next, a description will be given of a method of fixing the TWA 40 to the automobile 10 in the case of this embodiment. Fig. 20 shows a flowchart of an operation flow for fixing the TWA 40 according to this embodiment to the automobile 10.

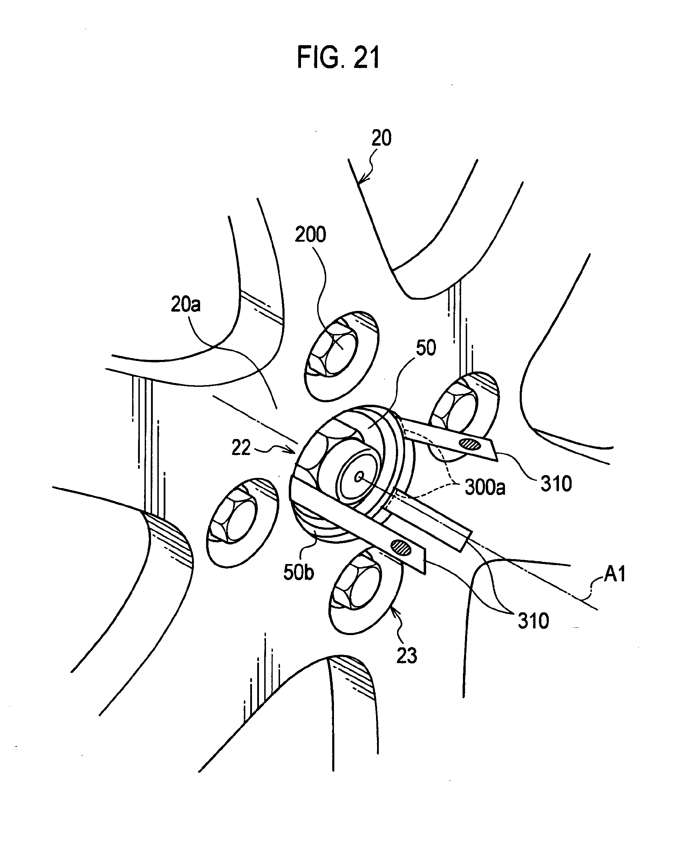

In step S110, the TWA 40 is temporarily fixed to the hub 50 in a state in which the TWA 40 is movable. Specifically, a hub bolt 200 (refer to Fig. 21) is screwed into a bolt hole 63 positioned at the uppermost part among the multiple bolt holes 63, thereby temporarily fixing the TWA 40 to the hub 50.

In step S120, the thickness gauge 400 is inserted into a gap formed between the hub hole 22 of the wheel 20 and the hub 50. Specifically, the dimension of the gap is measured by use of the thickness gauge 400.

In step S130, the identification mark 420 added to the leaf 410, which can be inserted into the gap, of the thickness gauge 400 is checked.

In step S140, the spacer 310 corresponding to the dimension of the gap is inserted. Specifically, a spacer roll 300 including the thickness identification mark 320A having the same color (or shape or pattern) as that of the identification mark 420 added to the leaf 410 of the thickness gauge 400 is selected, the leaf 410 having been inserted into the gap.

Furthermore, the selected spacer roll 300 is cut into a predetermined length (100mm, for example). Then, the spacers 310 each having the perforated line 300a are prepared. The prepared spacer 310 is inserted into the gap.

Note that, as described above, the identification mark 420 having the same color as that of the thickness identification mark 320B, which is added to the spacer 310 having half of the thickness with respect to the thickness of the leaf 410, is added to the leaf 410. Accordingly, the spacer 310 having the thickness of substantially half of the dimension of the measured gap is inserted into the gap.

In step S150, it is checked whether or not the selected spacer 310 is inserted at three positions or more in the gap.

Fig. 21 shows a state in which three spacers 310 are inserted into the gap formed between the hub hole 22 and the hub 50.

As shown in Fig. 21, multiple spacers 310 are inserted at positions different from one another in the gap. In this embodiment, at least three or more spacers 310 are inserted. Specifically, it is preferable to insert three or more spacers 310 by using positions as reference points, the positions being on diagonal lines of a polygon formed by straight lines connecting bolt holes 23 adjacent to each other. Note that as to the positions at which the spacers 310 are to be inserted, the spacers 310 do not necessarily have to be inserted at the positions on the diagonal lines as long as the intervals between the adjacent spacers 310 are maintained using the positions on the diagonal lines as the reference points, and as long as the insertion positions of the spacers 310 are substantially on the diagonal lines. In addition, in a case where fitting protrusions 24 (shown by a two-dot chain line in Fig. 3) for the hub 50 are provided on the inner circumferential surface 22a (refer to Fig. 3) forming the hub hole 22 of the wheel 20, the spacers 310 may be inserted by using positions as reference points, the positions being on diagonal lines of a polygon formed by straight lines connecting the fitting protrusions 24 adjacent to each other.

The insertion of the three or more spacers 310 into the gap allows the TWA 40 to be supported so that the gap between the hub hole 22 of the wheel 20 and the hub 50 can be uniform on the outer circumferential surface 50a of the hub 50. Specifically, the spacers 310 support the TWA 40 in the state in which the axis A1 of the hub 50 and the rotation axis A2 (refer to Fig. 9) of the TWA 40 are coincident with each other.

As shown in Fig. 20, in a case where the spacers 310 are inserted at three or more positions in the gap (YES in step S150), the hub bolts 200 are screwed into the bolt holes 63 formed in the disc rotor 61. Specifically, the hub bolts 200 are inserted through the bolt holes 23 of the wheel 20 and then, the hub bolts 200 are screwed into the bolt holes 63, thereby fixing the TWA 40 to the hub 50.

In step S170, it is checked whether or not the fastening of the TWA 40 to the hub 50 (disc rotor 61) by use of the multiple hub bolts 200 is completed.

In a case where the fastening of the TWA 40 to the hub 50 is completed (YES in step S170), in step S180, the spacers 310 protruding from an outer surface 20a (refer to Fig. 21) of the wheel 20 are cut off along the perforated lines 300a.

As shown in Fig. 21, the perforated lines 300a are formed in a direction intersecting with the axis A1 of the hub 50 in the state in which the spacers 310 are inserted into the gap formed between the hub hole 22 and the hub 50. In the state in which the spacers 310 are inserted into the gap, the perforated lines 300a are located at positions between a top end 50b of the hub 50 and the outer surface 20a of the wheel 20 forming the hub hole 22.

The portions of the spacers 310, which protrude from the outer surface 20a of the wheel 20, can be removed by cutting the spacers 310 along the perforated lines 300a while portions of the spacers 310 close to ends 310a from the perforated lines 300a remain. After the spacers 310 are cut off, a center cap (not shown) of the wheel 20 may be fitted into the hub hole 22.

### (4) Modification Example

In this embodiment, the same hub bolts 200 as those in the first embodiment are used. However, conventionally used general hub bolts may be used rather than the hub bolts 200 since the insertion of the spacers 310 into the gap formed between the hub hole 22 and the hub 50 supports the TWA 40 relatively firmly in the state in which the TWA 40 is centered. Moreover, in a case where hub bolts are provided to the disc rotor 61, conventionally used general hub nuts may be used.

Moreover, after the fastening of the TWA 40 to the hub 50 (disc rotor 61) by use of the multiple hub bolts 200 is completed, the hub bolts may be replaced with conventional hub bolts one by one. According to this method, the hub bolts 200, which are more expensive than conventional hub bolts, do not have to be used permanently, so that the costs to be covered by users can be suppressed.

### [Third Embodiment]

In a third embodiment, a description will be given of a fixing support device and a hole diameter measurement tool for a tire/wheel assembly (TWA) that can improve the accuracy of centering of the TWA 40, even in a case where the size of the hub hole 22 of the wheel 20 is not appropriate to the specification of the hub collar 100.

In addition, the fixing support device and the hole diameter measurement tool according to this embodiment can be applied to an automobile 10 for which it is difficult to use the hub collar 100 or the spacer 310 due to deformation of the hub 50, as long as the bolt holes 63 (or hub bolts) formed in the disc rotor 61, that is, the pitch circle diameter (PCD) is accurate. In general, the hub 50 may be deformed relatively often during the course of usage of the automobile 10, but the PCD hardly changes. In essence, the fixing support device or the hole diameter measurement tool according to this embodiment can be said to be more versatile than the hub collar 100 or the spacer 310 in this respect.

In this embodiment, a wheel guide that functions as the fixing support device for the TWA 40 is used in fixing the TWA 40 to the hub 50. A wheel guide 500 realizes the centering of the TWA 40 using the bolt hole 23 of the wheel 20 as the basis.

Note that hereinafter, the same reference numerals are used to denote the same components as those of the aforementioned first and second embodiments, and the descriptions and illustration thereof are omitted as appropriate.

### (1) Configuration of Fixing Support Device

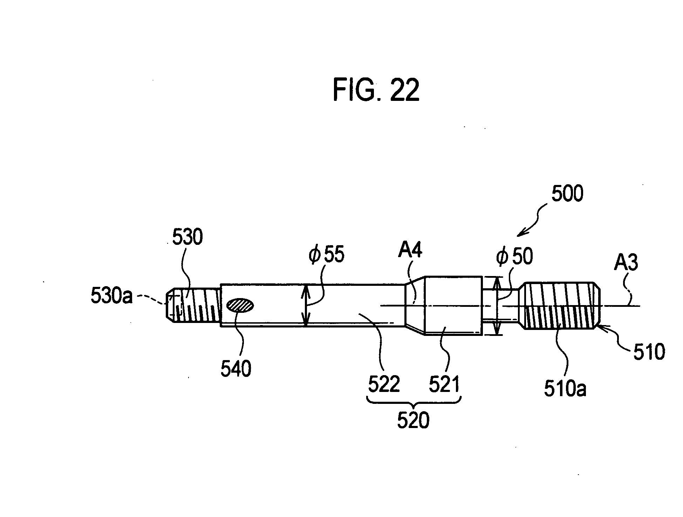

Fig. 22 is a side view of the wheel guide 500 constituting the fixing support device in this embodiment. As shown in Fig. 22, the wheel guide 500 includes a thread portion 510, a wheel guide unit 520 and a head portion 530. In addition, the wheel guide unit 520 includes a guide portion 521 and an extension portion 522.

The thread portion 510 is screwed into a bolt hole 63 (a hub-side screw portion) formed in the hub 50 (disc rotor 61). In this embodiment, the thread portion 510 constitutes a device-side screw portion. A thread 510a that is screwed into an internal thread (not shown) formed in the bolt hole 63 is formed in the thread portion 510.

The wheel guide unit 520 is formed outward of the thread portion 510 in a vehicle width direction with the thread portion 510 being screwed into the bolt hole 63. Specifically, the wheel guide unit 520 is provided at a position corresponding to the bolt hole 23 of the wheel 20 in the state in which the thread portion 510 is screwed into the bolt hole 63.

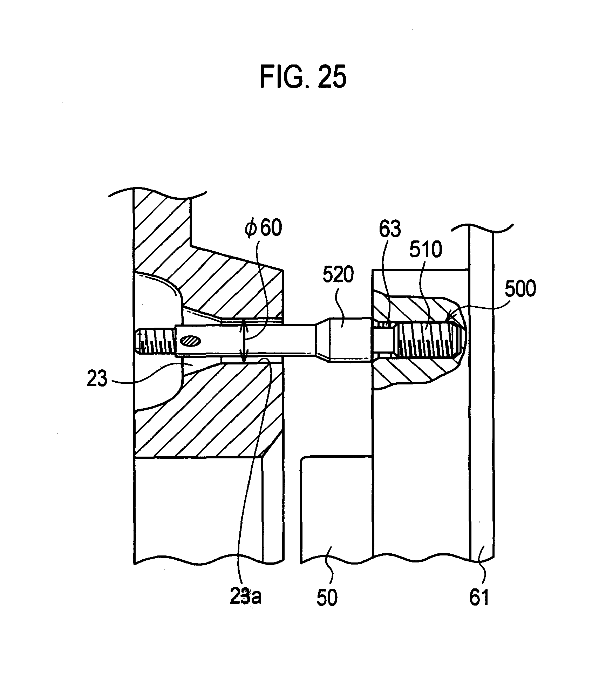

The guide portion 521 includes an outer diameter with which the wheel guide unit 520 is slidable on the inner circumferential surface 22a (refer to Fig. 25) of the bolt hole 23. An outer diameter Φ50 of the guide portion 521 is smaller than a diameter Φ60 of the bolt hole 23. Specifically, the wheel guide unit 520 includes the outer diameter with which the wheel guide unit 520 is slidable on the inner circumferential surface 23a of the bolt hole 23.

To be more specific, the difference between the outer diameter Φ50 and the diameter Φ60 is not greater than 0.03mm. In addition, an axis A3 of the thread portion 510 and an axis A4 of the wheel guide unit are coincident with each other.

Specifically, multiple wheel guides 500 are provided to correspond to the diameter Φ60 (refer to Fig. 25), which includes the tolerance, of the bolt hole 23 of the wheel 20. The outer diameters Φ50 of the guide portions 521 are thus different from one another. In this embodiment, the wheel guides 500 respectively including the outer diameters Φ50 (outer diameters of wheel guide units in the table) shown in Table 1 are provided.

**[Table 1]**

| UNIT = mm | | | | | | | | | | | |
|---|---|---|---|---|---|---|---|---|---|---|---|
| BOLT HOLE REFERENCE DIAMETERS | OUTER DIAMETERS OF WHEEL GUIDE UNITS | | | | | | | | | | |
| 11 | 10.95 | 10.96 | 10.97 | 10.98 | 10.99 | 11 | 11.01 | 11.02 | 11.03 | 11.04 | 11.05 |
| 12 | 11.95 | 11.96 | 11.97 | 11.98 | 11.99 | 12 | 12.01 | 12.02 | 12.03 | 12.04 | 12.05 |
| 13 | 12.95 | 12.96 | 12.97 | 12.98 | 12.99 | 13 | 13.01 | 13.02 | 13.03 | 13.04 | 13.05 |
| 14 | 13.95 | 13.96 | 13.97 | 13.98 | 13.99 | 14 | 14.01 | 14.02 | 14.03 | 14.04 | 14.05 |
| 15 | 14.95 | 14.96 | 14.97 | 14.98 | 14.99 | 15 | 15.01 | 15.02 | 15.03 | 15.04 | 15.05 |
| 16 | 15.95 | 15.96 | 15.97 | 15.98 | 15.99 | 16 | 16.01 | 16.02 | 16.03 | 16.04 | 16.05 |
| 17 | 16.96 | 16.96 | 16.97 | 16.98 | 16.99 | 17 | 17.01 | 17.02 | 17.03 | 17.04 | 17.05 |
| 18 | 17.95 | 17.96 | 17.97 | 17.98 | 17.99 | 18 | 18.01 | 18.02 | 18.03 | 18.04 | 18.05 |

As shown in Table 1, the multiple wheel guides 500 having the different outer diameters Φ50 in 0.01mm pitch are provided in this embodiment. In this embodiment, in order to easily find the dimensions of the outer diameters Φ50, an identification mark 540 showing the dimension of the outer diameter Φ50 is added to the extension portion 522. A color, a shape, a pattern or the like is used for the identification mark 540.

The extension portion 522 is continuous with the guide portion 521 and formed outward of the guide portion 521 in the vehicle width direction with the thread portion 510 being screwed into the bolt hole 63. An outer diameter Φ55 of the extension portion 522 is smaller than the outer diameter Φ50 of the guide portion 521. The extension portion 522 is held by an operator when the thread portion 510 is screwed into the bolt hole 63 and also when the wheel guide 500 is removed after the TWA 40 is fixed to the hub 50.

The head portion 530 is continuous with the wheel guide unit 520 and is formed outward of the wheel guide unit 520 in the vehicle width direction with the thread portion 510 being screwed into the bolt hole 63. A hexagonal groove 530a for hexagonal wrench is formed in the head portion 530. Specifically, the thread portion 510 can be easily screwed into the bolt hole 63, or the wheel guide 500 can be removed by a tool such as a hexagonal wrench being inserted into the hexagonal groove 530a.

### (2) Configuration of Hole Diameter Measurement Tool

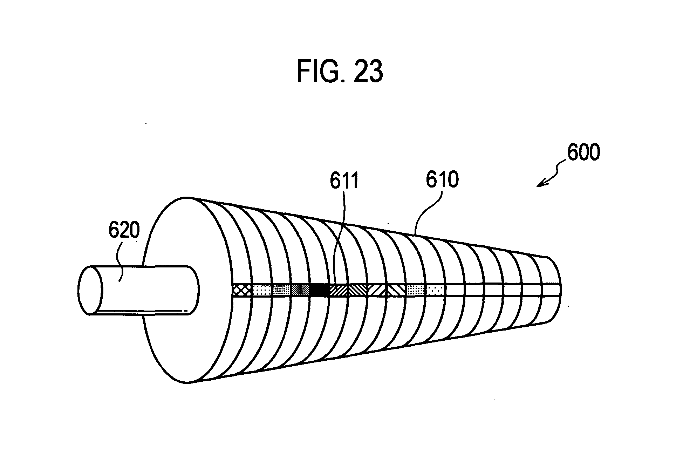

Fig. 23 is a perspective view of a hole diameter measurement tool 600 for measuring a diameter of the bolt hole 23 of the wheel 20. As shown in Fig. 23, the hole diameter measurement tool 600 includes a measurement portion 610 and a handle portion 620.

The measurement portion 610 is inserted into the bolt hole 23 of the wheel 20. The measurement portion 610 is of a truncated cone shape, and the diameter thereof gradually becomes larger towards the handle portion 620. The measurement portion 610 is inserted into the bolt hole 23 until the measurement portion 610 stops by the periphery of the bolt hole 23.

Identification marks 611 are added to a side portion of the measurement portion 610. Different colors (or shapes or patterns) are used for the identification marks 611 in accordance with diameters of the measurement portion 610. The colors of the identification marks 611 correspond to the colors of the identification marks 540 added to the wheel guides 500. Specifically, the wheel guide 500 having the appropriate outer diameter Φ50 corresponding to the diameter Φ60 of the bolt hole 23 can be easily selected by selecting a wheel guide 500 including the identification mark 540 having the same color as that of the identification mark 611 added thereto.

The handle portion 620 is held by an operator and helps the measurement portion 610 to be inserted into the bolt hole 23 easily.

### (3) Fixing Method

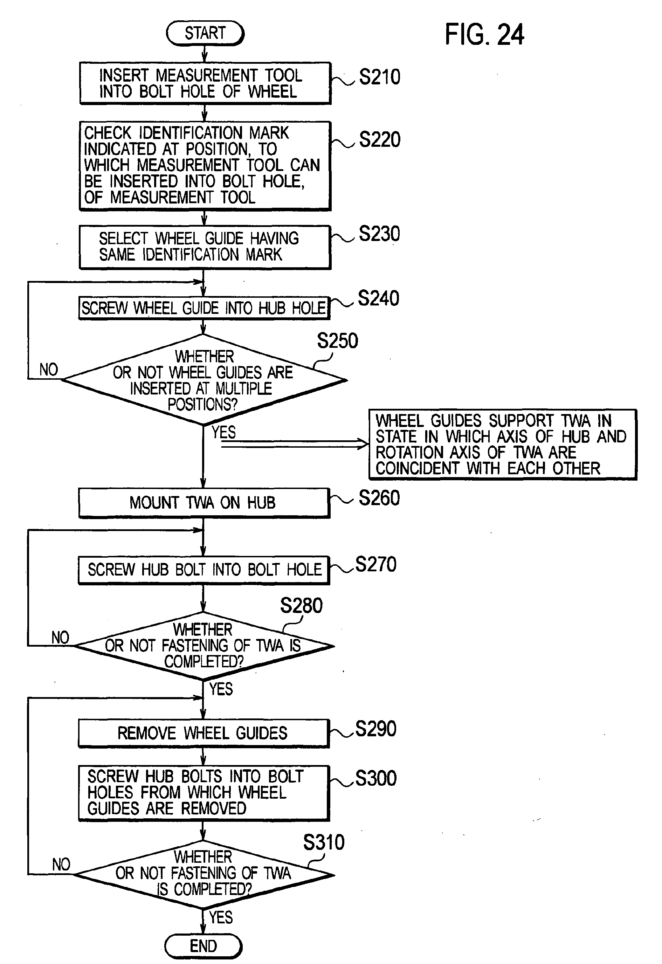

Next, a description will be given of a method of fixing the TWA 40 to the automobile 10 in this embodiment. Fig. 24 is a flowchart showing an operation flow for fixing the TWA 40 according to this embodiment to the automobile 10.

In step S210, the hole diameter measurement tool 600 is inserted into the bolt hole 23 of the wheel 20. Specifically, the diameter Φ60 of the bolt hole 23 is measured by use of the hole diameter measurement tool 600.

In step S220, the identification mark 611 added to the position, to which the measurement portion 610 can be inserted into the bolt hole 23, of the measurement portion 610 is checked.

In step S230, the wheel guide 500 including the identification mark 540 having the same color as the color of the identification mark 611 added thereto is selected. Specifically, the wheel guide 500 corresponding to the diameter Φ60 of the bolt hole 23, which is measured in step S210, is selected.

In step S240, the wheel guide 500 corresponding to the diameter Φ60 of the bolt hole 23 is screwed into the bolt hole 63 formed in the disc rotor 61.

In step S250, it is checked whether or not the wheel guides 500 are screwed into multiple positions. Specifically, in order to perform the centering of the TWA 40 with high accuracy, the wheel guides 500 are preferably screwed into at least two, preferably three bolt holes 63 among multiple bolt holes 63. Specifically, three or more wheel guides 500 are preferably inserted by using positions as the reference points, the positions being on diagonal lines of a polygon formed by straight lines connecting the bolt holes 23 adjacent to each other.

In a case where the wheel guides 500 are screwed into multiple positions (YES in step S250), the TWA 40 is mounted on the hub 50 in step S260. Specifically, the wheel guides 500 screwed into the bolt holes 63 are inserted through the bolt holes 23 of the wheel 20, thereby mounting the TWA 40 on the hub 50.

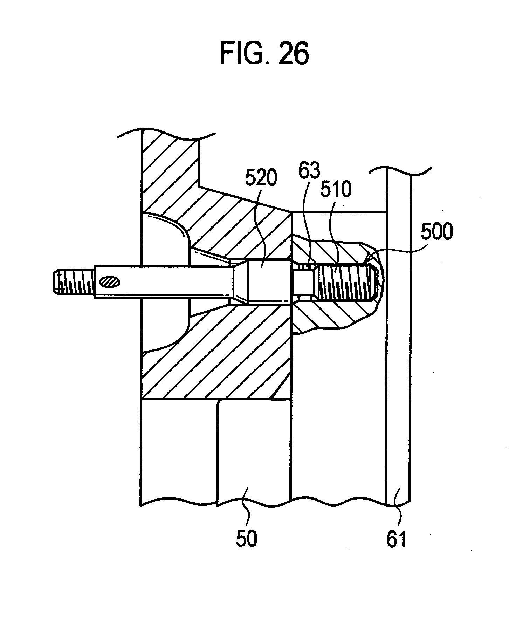

Fig. 25 is a partial cross-sectional view of the periphery of the hub 50 immediately before the TWA 40 is mounted on the hub 50. Fig. 26 is a partial cross-sectional view of the periphery of the hub 50 after the TWA 40 is mounted on the hub 50.

As shown in Fig. 25, the screwing of the thread portion 510 of the wheel guide 500 into the bolt hole 63 causes a state in which the wheel guide unit 520 protrudes from the disc rotor 61. The wheel guide unit 520 protruding from the disc rotor 61 is then inserted through the bolt hole 23 of the wheel 20. The wheel 20 (TWA 40) is thereby mounted on the hub 50.

Fig. 26 shows a state when the wheel guide unit 520 is inserted through the bolt hole 23 of the wheel 20, and when the wheel 20 is thereby mounted on the hub 50. In this state, the outer diameter Φ50 of the wheel guide unit 520 (the guide portion 521) is smaller than the diameter Φ60 of the bolt hole 23 within the range of 0.03mm. Accordingly, even in a case where the diameter Φ60 includes a tolerance, the wheel 20 (TWA 40) can be centered with high accuracy.

As shown in Fig. 24, in step S270, the hub bolt 200 (fastening device) is screwed into the bolt hole 63 formed in the disc rotor 61. Specifically, in a state in which the wheel guide 500 is inserted into at least any one of the bolt holes 23 formed in the wheel 20, the hub bolt 200 is screwed into the bolt hole 63 corresponding to the bolt hole 23 not including the wheel guide 500 inserted thereto, thereby fixing the TWA 40 to the hub 50.

In step S280, it is checked whether or not the fastening of the TWA 40 to the hub 50 (disc rotor 61) by use of the hub bolt 200 is completed.

In a case where the fastening of the TWA 40 to the hub 50 is completed (YES in step S280), the wheel guide 500 screwed into the bolt hole 63 is removed from the hub 50 (disc rotor 61) in step S290.

In step S300, the hub bolt 200 is screwed into the bolt hole 63 from which the wheel guide 500 is removed, thereby fixing the TWA 40 to the hub 50.

In step S310, it is checked whether or not the fastening of the TWA 40 to the hub 50 (disc rotor 61) by use of the multiple hub bolts 200 is completed for all the bolt holes 63. In a case where the fastening of the TWA 40 to the hub 50 is completed for all the bolt holes 63 (YES in step S310), the operation for fixing the TWA 40 to the automobile 10 is completed.

### (4) Modification Example

Next, a description will be given of a modification example of the fixing support device according to this embodiment.

### (4.1) Nut Type Wheel Guide

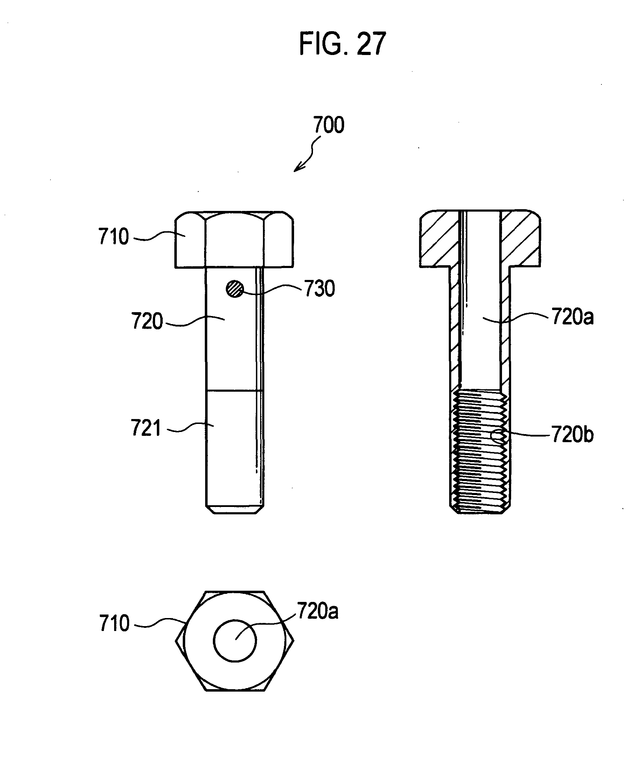

Fig. 27 shows a side view, a plan view and a cross-sectional view of a wheel guide 700 according to a modification example of the fixing support device. As shown in Fig. 27, the wheel guide 700 includes a nut portion 710 and a body portion 720. The wheel guide 700 is used in a case where the disc rotor 61 is provided with a hub bolt.

The nut portion 710 is of a hexagonal shape and is rotatable by use of a tool such as a wrench. The nut portion 710 is continuous with the body portion 720.

The body portion 720 corresponds to the wheel guide unit 520 of the aforementioned wheel guide 500. Specifically, the guide portion 721 has the outer diameter with which the guide portion 721 is slidable on the inner circumferential surface 23a of the bolt hole 23. Specifically, the difference between the outer diameter of the body portion 720 and the diameter Φ60 is not greater than 0.03mm. In this modification example as well, the wheel guides 700 having the respective outer diameters shown in Table 1 are provided as in the case of the wheel guides 500.

A hollow portion 720a and an internal thread 720b are formed in the body portion 720. The hollow portion 720a penetrates from one end of the wheel guide 700 to the other end thereof. The internal thread 720b is formed in the hollow portion 720a on a side opposite to the nut portion 710.

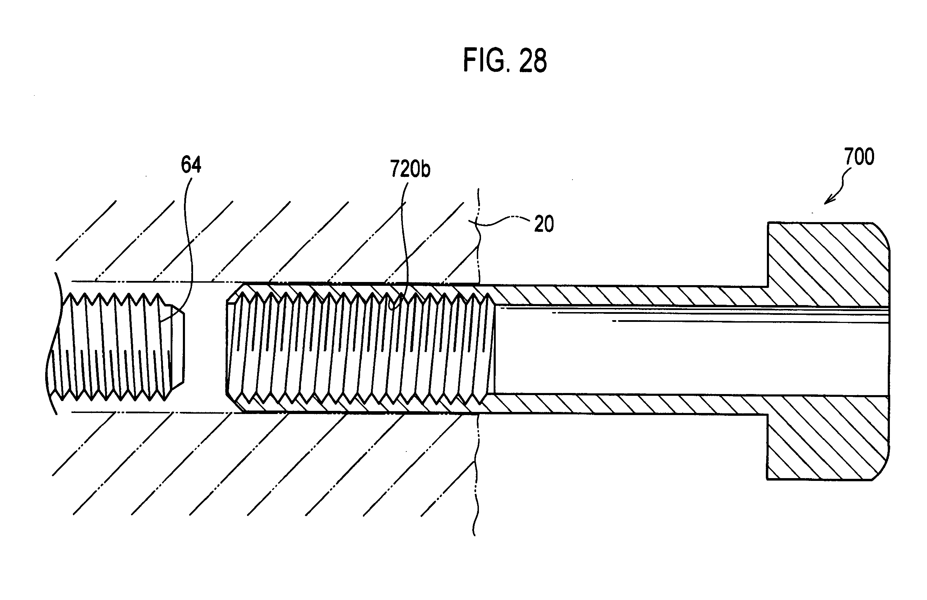

Fig. 28 is a view showing a state in which the wheel guide 700 is used. As shown in Fig. 28, an external thread formed in a hub bolt 64 provided to the hub 50 (disc rotor 61) is screwed into the internal thread 720b. The internal thread 720b is formed in a length of 10mm to 50mm from the position apart from the top end of the guide portion 721 by 1mm to 30mm. The diameter of the hollow portion 720a not including the internal thread 720b formed thereon is larger than the hub bolt 64 screwed into the internal thread 720b by at least 1mm or more, and is configured so that the hub bolt 64 cannot be brought into contact with an inner wall forming the hollow portion 720a.

In addition, as in the case of the identification mark 540 of the wheel guide 500, an identification mark 730 is added to the body portion 720.

### (4.2) Hole Diameter Measurement Tool

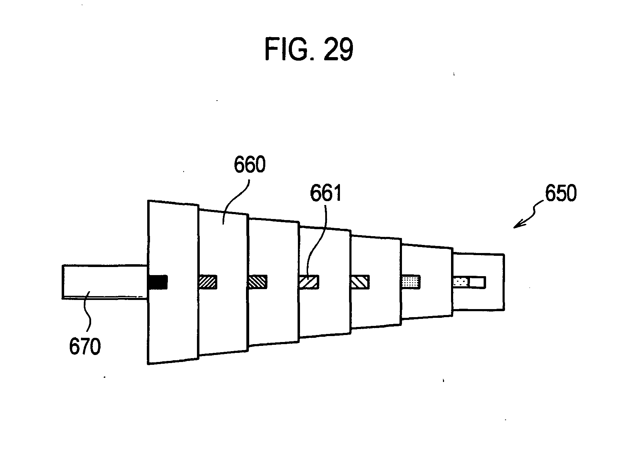

Fig. 29 is a side view of a bolt hole measurement tool 650 according to a modification example of the hole diameter measurement tool. As shown in Fig. 29, the bolt hole measurement tool 650 includes a measurement portion 660 and a handle portion 670. The shape of the measurement portion 660 of the bolt hole measurement tool 650 is different in comparison with the aforementioned hole diameter measurement tool 600 (refer to Fig. 23). The measurement portion 660 is of a stair step-like shape in which the diameter thereof becomes larger in a stepwise manner towards the handle portion 670. An identification mark 661 similar to the identification mark 611 is added to each step of the measurement portion 660. The manufacturing of the bolt hole measurement tool 650 is simple as compared with that of the hole diameter measurement tool 600. Thus, the bolt hole measurement tool 650 has an advantage that the burden of costs can be lessened in the case of an operation targeting a particular kind of vehicle or wheel.

### (4.3) Other Modification Examples

Although the aforementioned wheel guide 500 is formed of the thread portion 510 and the wheel guide unit 520 as a single body, the wheel guide 500 may be formed so that the wheel guide unit 520 can be separated from the main body of the wheel guide 500. In this case, only the multiple wheel guide units 520 may be prepared in accordance with the dimensions of the outer diameter Φ50. Furthermore, although the wheel guide 500 includes the hexagonal groove 530a formed therein, the wheel guide 500 may be formed as a polygonal bolt (quadrangle or hexagon, for example), instead of forming the hexagonal groove 530a.

In addition, in this embodiment as well, a general hub bolt that has been conventionally used may be employed instead of the hub bolt 200.

### [Effects and Advantages]

### (1) Problems with Conventional Method

As described above, it has been recognized that it is important to make the axis of an axle (hub) and the rotation axis of a TWA be coincident with each other when the tire assembly is mounted on a vehicle. In addition to the method disclosed in the prior art document (Japanese Laid-Open Patent Publication No. 2001-1964), various methods are known.

For example, the known methods include a method of suppressing the rotation axis of a TWA from being shifted from the axis of an axle due to an allowance for variations in the depth of engagement of a taper surface of a hub bolt or a hub nut, the method being disclosed in Japanese Utility Model Publication No. Sho 59-24563. The method suppresses the shifting of the rotation axis of the TWA by placing a flat washer at a contact part between the hub bolt or the hub nut and a wheel. In other words, this method is based on a concept that the wheel positioned depending on accuracy of a hub is fixed to the hub without changing the positioned state. According to this method, a certain effect in suppressing the shifting of the rotation axis of a tire wheel from the axis of an axle is recognized.

However, in terms of manufacturing costs or the like, it is inevitable to provide a constant tolerance to each component of a hub or a wheel for commercial products, which are distributed through the market. Accordingly, there is a problem that the shifting of the rotation axis of the TWA from the axis of an axle cannot be suppressed in a case where the tolerance of the hub is large.

The aforementioned first to third embodiments provide a method of surely suppressing the shifting of the rotation axis of a TWA from an axis of an axle while allowing a constant tolerance for each component of the aforementioned hub or wheel.

### (2) Comparison Test

Next, a result of a comparison test between the conventional method and the method according to the present invention.

### (2.1) Test Method

Tables 2 and 3 show results of the same comparison tests conducted by using different vehicles. Specifically, Table 2 shows residual unbalance values when a centering operation of the TWA 40 is performed by using an FF vehicle made in Germany (FF vehicle (1)). Table 3 shows residual unbalance values when the centering operation of the TWA 40 is performed by using an FF vehicle made in France (FF vehicle (2)).

**[Table 2]**

| VEHICLE TYPE: FF VEHICLE (1) | | RESIDUAL UNBALANCE (UNIT = g) | |
|---|---|---|---|
| TIRE SIZE | 235 / 45R18 | FIRST TEST | SECOND TEST |
| CENTERING OPERATION | NONE | 13 | 13 |
| | CONVENTIONAL METHOD | 8 | 9 |
| | EXAMPLE 1 | 1 | - |
| | EXAMPLE 2 | 2 | - |

| TIRE SIZE | 245 / 40R19 | | |
|---|---|---|---|
| CENTERING OPERATION | NONE | 15 | 15 |
| | CONVENTIONAL METHOD | 9 | 8 |
| | EXAMPLE 1 | 2 | - |
| | EXAMPLE 2 | 2 | - |

**[Table 3]**

| VEHICLE TYPE: FF VEHICLE (2) | | RESIDUAL UNBALANCE (UNIT = g) | |
|---|---|---|---|
| TIRE SIZE | 235 / 45R18 | FIRST TEST | SECOND TEST |
| CENTERING OPERATION | NONE | 14 | 14 |
| | CONVENTIONAL METHOD | 9 | 7 |
| | EXAMPLE 1 | 1 | - |
| | EXAMPLE 2 | 1 | - |

| TIRE SIZE | 245 / 40R19 | | |
|---|---|---|---|
| CENTERING OPERATION | NONE | 12 | 12 |
| | CONVENTIONAL METHOD | 6 | 6 |
| | EXAMPLE 1 | 2 | - |
| | EXAMPLE 2 | 2 | - |

The contents of the "centering operation" in Tables 2 and 3 are as follows.
"None": No centering operation is performed.
"Conventional Method": The method disclosed in Japanese Laid-Open Patent Publication No. 2001-1964.
"Example 1": The method according to the third embodiment.
"Example 2": The method according to the second embodiment.

Following the trend in recent years, 18 inch or 19 inch wheels (tires) of larger diameters are mounted on FF vehicle (1) and FF vehicle (2).

The residual unbalances are results of unbalanced conditions of the TWA 40 that are measured by using a finish balancer (on the car type) in a state in which the TWA 40 is mounted on FF vehicle (1) (or FF vehicle (2)).

### (2.2) Test Results

As shown in Tables 2 and 3, the residual unbalances of both of the FF vehicle (1) and FF vehicle (2) in Examples 1 and 2 are extremely small. Specifically, the results mean that the TWA 40 is fixed to the hub 50 in a state in which the axis line A1 of the hub 50 and the rotation axis A2 of the TWA 40 are coincident with each other with high accuracy. Thus, even in a case where the diameter size of the TWA 40 is made larger, the occurrence of unnecessary vibrations while the vehicle is running at high speed can be suppressed.

### (3) Effects and Advantages

Next, descriptions will be given of effects and advantages of each of the embodiments.

### (3.1) First Embodiment

The hub guides 120 of the hub collar 100 support the TWA 40 so that the distance between the outer circumferential surface 50a of the hub 50 and the inner circumferential surface 110c of the hub ring portion 110 can be uniform on the circumference of the hub ring portion 110. Specifically, the hub guides 120 support the TWA 40 in a state in which the axis A1 of the hub 50 and the rotation axis A2 of the TWA 40 (the hub collar 100) are coincident with each other.

Moreover, even in a case where the diameter size of the TWA 40 is made larger, the hub collar 100 can be used since the aforementioned spring constants are set. That is, even in a case where the diameter size of the TWA 40 is made larger, the occurrence of unnecessary vibrations while the vehicle is running at high speed can be suppressed.

### (3.2) Second Embodiment

The spacer 310 of a thin plate-like shape is inserted into a gap formed between the hub hole 22 of the wheel 20 and the hub 50. In this manner, the TWA 40 is supported so that the gap between the hub hole 22 of the wheel 20 and the hub 50 can be uniform on the outer circumferential surface 50a of the hub 50. Specifically, the spacer 310 supports the TWA 40 in a state in which the axis A1 of the hub 50 and the rotation axis A2 of the TWA 40 are coincident with each other.

The spacer 310 can be used regardless of the diameter size of the TWA 40. That is, even in a case where the diameter size of the TWA 40 is made larger, the occurrence of unnecessary vibrations while the vehicle is running at high speed can be suppressed.

In this embodiment, the accuracy of the centering can be further improved by inserting the spacers 310 at multiple positions in the gap between the hub hole 22 and the hub 50. Moreover, since the perforated line 300a is formed on the spacer 310, after the TWA 40 is fixed to the hub 50, a portion of the spacer 310 that has become unnecessary can be easily removed by cutting off the portion along the perforated line 300a.

In this embodiment, the operator can easily select the appropriate spacer 310 by use of the thickness gauge 400 on the basis of the identification marks 420 added to the thickness gauge 400 and the thickness identification marks 320B (the thickness identification marks 320A) added to the spacers 310 (the spacer rolls 300).

In addition, the fixing method for the TWA 40 by use of the spacer 310 can be applied to the automobile 10 or the wheel 20 for which the hub collar 100 cannot be used.

### (3.3) Third Embodiment

The wheel guide 500 including the outer diameter Φ50 slightly smaller than the diameter Φ60 of the bolt hole 23 of the wheel 20 is inserted through the bolt hole 23. The TWA 40 is thereby supported in the state in which the axis A1 of the hub 50 and the rotation axis A2 of the TWA 40 are coincident with each other.

The wheel guide 500 can be used regardless of the diameter size of the TWA 40. Specifically, even in a case where the diameter size of the TWA 40 is made larger, the occurrence of unnecessary vibrations while the vehicle is running at high speed can be suppressed.

In this embodiment, the wheel guide 500 includes the extension portion 522 having the outer diameter Φ55 smaller than the outer diameter Φ50 of the guide portion 521. Thus, the wheel guide 500 is easily inserted through the bolt hole 23, and also the operator can easily screw the wheel guide 500 into the bolt hole 63 and remove the wheel guide 500 therefrom.

In this embodiment, the operator can easily select an appropriate wheel guide 500 by use of the hole diameter measurement tool 600 on the basis of the identification marks 611 added to the hole diameter measurement tool 600 and the identification marks 540 added to the wheel guides 500.

In addition, the fixing method for the TWA 40 by use of the wheel guide 500 can be applied to the automobile 10 and the wheel 20 for which the hub collar 100 or the spacer 310 cannot be used.

### (3.4) Summary

As has been described above, according to the first to third embodiments of the present invention, the problems with the vibrations caused by the attachment state of the TWA 40 to the automobile 10, which have been difficult problems to be solved by the conventional method, can be solved in a short time.

Specifically, a time related or economic inconvenience for the user of the automobile 10, or a time related or economic inconvenience such as re-maintenance for the service provider side can be solved. Furthermore, the tiredness of the driver associated with the vibrations or insufficient running stability occurring when the rotation axis A2 of the TWA 40 is shifted from the axis A1 of the hub 50 can be reduced, resulting in a contribution to an improvement in safety.

### [Other Embodiments]

The spacer 310 according to the second embodiment assumes that the hub 50 and the hub hole 22 are finished with high accuracy and are not deformed or the like. In addition, the spacer 310 cannot be applied to a case where there is no center hole at the center portion of the wheel 20 or where the center hole is very small.

In addition, the wheel guide 500 according to the third embodiment assumes that the bolt holes 63 formed in the disc rotor 61 and the bolt holes 23 of the wheel 20 are finished with high accuracy. Accordingly, the wheel guide 500 cannot be applied to a case where the accuracies of these components are poor.

In general, these components are finished with high accuracy. However, it is impossible to deny a possibility that some kind of deformation occurs during the course of usage of the automobile 10. However, a possibility that a problem occurs on both sides of the hub 50 and the wheel 20 at the same time is supposedly low. The centering of the TWA 40 with high accuracy can be thus accomplished in various cases by providing the spacer 310 and the wheel guide 500 in combination as a maintenance kit.

Moreover, although the four bolt holes 23 are formed in the wheel 20 in the aforementioned first to third embodiments, five or more bolt holes 23 may be formed in the wheel 20. Alternatively, the number of bolt holes 23 may be three or less. In particular, the hub collar 100 according to the first embodiment and the spacer 310 according to the second embodiment may be applied to a case where one bolt hole 23 is formed in the wheel 20, that is, to a case where a so-called center lock system is employed.

As described, the present invention also includes various embodiments and the like not described in this description as a matter of course. Accordingly, the technical scope of the present invention is only defined by the specific subject matters of the invention according to the scope of the invention as defined by the appended claims appropriate for this disclosure.

### INDUSTRIAL APPLICABILITY

As has been described above, the fixing support device, the fastening device and the tire/wheel assembly fixing method according to the present invention are advantageous in maintenance of an automobile, or the like since a tire/wheel assembly can be fixed to a hub of a vehicle in a state in which the axis of an axle and the rotation axis of a tire/wheel assembly are coincident with each other.

## Claims

1. A tire/wheel assembly fixing system for fixing a tire/wheel assembly (40), in the following named TWA (40), including a tire (30) mounted on a wheel (20) to a hub (50) of a vehicle (10) by using a fastening device (200), the TWA fixing system including a fixing support device (100) attached to the wheel (20), wherein the fixing support device (100) includes:
- an annular hub ring portion (110) which fits into a hub hole (22) formed in a rotation axis portion (21) of the wheel (20) and into which the hub (50) is inserted; and
- a hub guide unit (120) provided at an inner circumferential surface (110c) of the hub ring portion (110),
- the hub guide unit (120) including movable pieces (121) being biased inward in a radial direction of the hub (50), being brought into contact with the hub (50) when the hub (50) is inserted into the hub ring portion (110), and thus being outwardly movable in the radial direction,
- a first diameter (Φ11) formed by the movable pieces (121) in a state in which the movable pieces (121) are not in contact with the hub (50) being smaller than the diameter (Φ21) of the hub (50),
- a second diameter (Φ12) formable when the diameter formed by the movable pieces (121) is widened by the hub (50) being larger than the diameter of the hub (50),
and wherein the fastening device (200) includes:
- a device-side screw portion (240) screwed to a hub-side screw portion (63) formed in the hub (50);
- a head portion (210) being continuous with the device-side screw portion (240) and being located outward of the device-side screw portion (240) in a vehicle width direction;
- a wheel fixing portion (230) being positioned between the device-side screw portion (240) and the head portion (210), and being brought into contact with the periphery of an attachment hole (23) for the vehicle, which is formed in the wheel (20); and
- a sliding plate portion (220) existing between the wheel fixing portion (230) and the head portion (210) and being slidable with respect to the device-side screw portion (240) and the wheel fixing portion (230), and
- the wheel fixing portion (230) being attached to the device-side screw portion (240) so as to be movable in a direction orthogonal to an axis (A10) of the device-side screw portion (240).

2. The TWA fixing system according to claim 1, wherein the movable piece (121) includes an elastic portion (121a) continuous with the hub ring portion (110), the elastic portion (121a) being located inward of an inner circumferential surface of the hub ring portion (110) in the radial direction of the hub (50), and biases the movable piece (121) inward in the radial direction of the hub (50).

3. The TWA fixing system according to claim 2, wherein a spring constant of the elastic portion (121a) is between 0.01mm/10kg to 0.01mm/80kg.

4. The TWA fixing system according to one of the preceding claims, wherein the first diameter (Φ11) is smaller than the minimum diameter (Φ_{MIN}) including a tolerance of the hub (50) by 0.1mm to 0.2mm.

5. The TWA fixing system according to one of the preceding claims, wherein the second diameter (Φ12) is larger than the maximum diameter (Φ_{MAX}) including a tolerance of the hub (50) by 0.05 mm to 0.10 mm.

6. The TWA fixing system according to one of the preceding claims, wherein the wheel fixing portion (230) includes an insertion hole (230a) through which the device-side screw portion (240) is inserted, and a diameter (Φ30) of the insertion hole is larger than an outer diameter (Φ40) of the device-side screw portion (240) by 0.06mm to 0.15mm.

7. A tire/wheel assembly fixing method for fixing a tire/wheel assembly (40), in the following named TWA (40), including a tire (30) mounted on a wheel (20) to a hub (50) of a vehicle (10) by using a fastening device (200), the method including the steps of:
- temporarily fixing the TWA to the hub in a state in which the TWA is movable;
- inserting a thin plate-like spacer (310) corresponding to a dimension of a gap formed between a hub hole (22) formed in the wheel (20), which fits into the hub (50), and the hub (50); and
- inserting the fastening device (200) into an attachment hole (23) for the vehicle, which is formed in the wheel (20), and then fixing the TWA to the hub (50) by screwing the fastening device (200) to a hub-side screw portion (63) formed in the hub (50).

8. The TWA fixing method according to claim 7, wherein in the step of inserting the spacer (310), a plurality of the spacers (310) are inserted at positions different from each other in the gap.

9. The TWA fixing method according to claim 8, wherein in the step of inserting the spacer (310), at least three or more of the spacers (310) are inserted.

10. The TWA fixing method according to claim 9, wherein in the step of inserting the spacer (310), the spacers (310) are inserted by using positions on diagonal lines of a polygon as reference points, the polygon being formed by straight lines connecting the attachment holes (23) adjacent to each other or straight lines connecting engagement protrusions (24) adjacent to each other among engagement protrusions (24) for the hub (50), which are provided on an inner circumferential surface (22a) forming the hub hole (22).

11. The TWA fixing method according to one of claims 8 to 10, further including the step of inserting a thickness gauge (400) in the gap and then measuring a dimension of the gap by using the thickness gauge (400), wherein in the step of inserting the spacer (310), the spacer (310) has a thickness substantially half of the dimension of the gap measured in the step of inserting the thickness gauge (400).

12. The TWA fixing method according to one of claims 7 to 11, wherein broken line-like cut holes (300a) are formed on the spacer (310) in a direction intersecting with an axis (A1) of the hub (50) in a state in which the spacer (310) is inserted into the gap, and the cut holes (300a) are positioned between a top end of the hub (50) and an outer surface of the wheel (20) forming the hub hole (22) in the state in which the spacer (310) is inserted into the gap, the method further including the step of cutting the spacer (310) along the cut holes.

13. A tire/wheel assembly fixing method for fixing a tire/wheel assembly (40) to a hub (50) of a vehicle (10) for reducing vibrations in vehicles by using a fixing support device (500) and a plurality of fastening devices (200), the tire/wheel assembly (40) including a tire (30) mounted on a wheel (20), the fixing support device (500) including:
- a device-side screw portion (510) configured to be screwed to a hub-side screw portion (63) formed in the hub (50); and
- a wheel guide unit (520) formed outward of the device-side screw portion (510) in a vehicle width direction with the device-side screw portion (510) being screwed to the hub-side screw portion (63),
- the wheel guide unit (520) having an outer diameter (Φ50) with which the wheel guide unit (520) is slidable on an inner circumferential surface (23a) of an attachment hole (23) for the vehicle (10), which is formed in the wheel (20),
- an axis (A3) of the device-side screw portion (510) and an axis (A4) of the wheel guide unit (520) being coincident with each other,
- a plurality of the fixing support devices (500) being provided, outer diameters of the wheel guide units (520) of the fixing support devices (500) being different from one another,
the method comprising the steps of:
- measuring a diameter of the attachment hole (23) by using a measurement tool (600);
and
- selecting the fixing support device (500) corresponding to the diameter of the attachment hole (23) which is measured in the measuring step,
- screwing the fixing support device (500) to the hub-side screw portion (63) in a state in which the fixing support device (500) is inserted into at least one of the attachment holes (23) formed in the wheel (20) that is temporarily fixed to the hub (50),
- screwing the fastening device (200) to the hub-side screw portion (63) corresponding to the attachment hole (23) not having the fixing support device (500) inserted therein,
- removing the fixing support device (500) from the hub (50);
- screwing the fastening device (200) to the hub-side screw portion (63) from which the fixing support device (500) is removed, and then
- fixing the tire/wheel assembly (40) to the hub (50).

14. tire/wheel assembly fixing method according to claim 13, wherein the fixing support device (500) is screwed to each of a plurality of the hub-side screw portions (63) in the step of screwing the fixing support device (500) to the hub-side screw portion (63).

15. The tire/wheel assembly fixing method according to claim 14, wherein the fixing support devices (500) are screwed to the plurality of hub-side screw portions (63) located on diagonal lines with the hub (50) being as the center of the line.

## Patentansprüche

1. Ein Reifen-/Radanordnungsbefestigungssystem zum Befestigen einer Reifen-/Radanordnung (40), im folgenden TWA (40) genannt, die einen auf einem Rad (20) montierten Reifen (30) aufweist, an einer Nabe (50) eines Fahrzeugs (10) unter Verwendung einer Befestigungsvorrichtung (200), wobei das TWA-Befestigungssystem eine Befestigungsstützvorrichtung (100) aufweist, die an dem Rad (20) befestigt ist, wobei die Befestigungsstützvorrichtung (100) aufweist:
- ein ringförmiges Nabenringteil (110), das in ein Nabenloch (22) passt, das in einem Rotationsachsenteil (21) des Rades (20) ausgebildet ist und in das die Nabe (50) eingesetzt wird; und
- eine Nabenführungseinheit (120), die an einer inneren umlaufenden Oberfläche (110c) des Nabenringteils (110) vorgesehen ist,
- wobei die Nabenführungseinheit (120) bewegliche Teile (121) aufweist, die in radialer Richtung der Nabe (50) nach innen vorgespannt sind, die mit der Nabe (50) in Kontakt gebracht werden, wenn die Nabe (50) in das Nabenringteil (110) eingesetzt wird, und die daher in radialer Richtung nach außen beweglich sind,
- einen ersten Durchmesser (Φ11), der von den beweglichen Teilen (121) in einem Stadium, in dem die beweglichen Teile (121) mit der Nabe (50) nicht in Kontakt stehen, kleiner als der Durchmesser (Φ21) der Nabe (50) ist,
- einen zweiten Durchmesser (Φ12), der gebildet werden kann, wenn der Durchmesser, der durch die beweglichen Teile (121) gebildet wird, durch die Nabe (50) aufgeweitet wird, der größer ist als der Durchmesser der Nabe (50), und wobei die Befestigungsvorrichtung (200) aufweist:
- einen vorrichtungsseitigen Verschraubungsteil (240), der mit einem nabenseitigen Verschraubungsteil (63), der in der Nabe (50) ausgebildet ist, verschraubt ist;
- einen Kopfteil (210), der mit dem vorrichtungsseitigen Verschraubungsteil (240) zusammenhängt und in Richtung einer Fahrzeugbreite gesehen außen vom vorrichtungsseitigen Verschraubungsteil (240) angeordnet ist;
- einen Radbefestigungsteil (230), der zwischen dem vorrichtungsseitigen Verschraubungsteil (240) und dem Kopfteil (210) angeordnet ist und in Kontakt mit dem Umfang eines Befestigungslochs (23) für das Fahrzeug gebracht wird, das im Rad (20) ausgebildet ist; und
- einen verschiebbaren Plattenteil (220), der zwischen dem Radbefestigungsteil (230) und dem Kopfteil (210) liegt und in Bezug zum vorrichtungsseitigen Verschraubungsteil (240) und dem Radbefestigungsteil (230) verschiebbar ist, und
- der Radbefestigungsteil (230) an dem vorrichtungsseitigen Verschraubungsteil (240) so befestigt ist, dass er in einer Richtung orthogonal zu einer Achse (A10) des vorrichtungsseitigen Verschraubungsteils (240) beweglich ist.

2. Das TWA-Befestigungssystem nach Anspruch 1, wobei das bewegliche Stück (121) einen elastischen Abschnitt (121a) aufweist, der mit dem Nabenringteil (110) zusammenhängend ist, wobei der elastische Abschnitt (121a) innerhalb einer inneren umlaufenden Oberfläche des Nabenringteils (110) in radialer Richtung der Nabe (50) angeordnet ist, und der die beweglichen Teile (121) in radialer Richtung der Nabe (50) nach innen vorspannt.

3. Das TWA-Befestigungssystem nach Anspruch 2, wobei eine Federkonstante des elastischen Abschnitts (121a) zwischen 0,01mm/10kg und 0,01mm/80kg ist.

4. Das TWA-Befestigungssystem nach einem der vorstehenden Ansprüche, wobei der erste Durchmesser (Φ11) kleiner als der kleinste Durchmesser (ΦMIN) einschließlich einer Toleranz der Nabe (50) von 0,1mm bis 0,2mm ist.

5. Das TWA-Befestigungssystem nach einem der vorstehenden Ansprüche, wobei der zweite Durchmesser (Φ12) größer als der größte Durchmesser (Φ_{MAX}) einschließlich einer Toleranz der Nabe (50) von 0,05mm bis 0,10mm ist.

6. Das TWA-Befestigungssystem nach einem der vorstehenden Ansprüche, wobei der Radbefestigungsteil (230) ein Einsatzloch (230a) aufweist, durch das der vorrichtungsseitige Verschraubungsteil (240) eingesetzt wird, und ein Durchmesser (Φ30) des Einsatzlochs 0,06mm bis 0,15mm größer als ein äußerer Durchmesser (Φ40) des vorrichtungsseitigen Verschraubungsteils (240) ist.

7. Ein Reifen-/Radanordnungsbefestigungsverfahren zum Befestigen einer Reifen-/Radanordnung (40), im folgenden TWA (40) genannt, die einen auf einem Rad (20) montierten Reifen (30) aufweist, an einer Nabe (50) eines Fahrzeugs (10) unter Verwendung einer Befestigungsvorrichtung (200), wobei das Verfahren die folgenden Schritte aufweist:
- temporäres Befestigen des TWA an der Nabe in einem Stadium, in dem die TWA beweglich ist;
- Einsetzen eines dünnen, plattenartigen Abstandshalters (310), der einem Maß eines Spalts, der zwischen einem Nabenloch (22), das in dem Rad (20) ausgebildet und auf die Nabe aufsetzbar ist, und der Nabe (50) besteht; und
- Einsetzen der Befestigungsvorrichtung (200) in ein Befestigungsloch (23) für das Fahrzeug, dass in dem Rad (20) ausgebildet ist, und nachfolgend Befestigen der TWA an der Nabe (50) durch Verschrauben der Befestigungsvorrichtung (200) mit einem nabenseitigen Verschraubungsteil (63), der an der Nabe (50) ausgebildet ist.

8. Das TWA-Befestigungsverfahren nach Anspruch 7, wobei beim Schritt des Einsetzens des Abstandshalters (310) eine Vielzahl von Abstandshaltern (310) an voneinander verschiedenen Positionen in den Spalt eingesetzt wird.

9. Das TWA-Befestigungsverfahren nach Anspruch 8, wobei beim Schritt des Einsetzens des Abstandshalters (310) mindestens drei oder mehr der Abstandshalter (310) eingesetzt werden.

10. Das TWA-Befestigungsverfahren nach Anspruch 9, wobei beim Schritt des Einsetzens des Abstandshalters (310) die Abstandshalter (310) unter Verwendung von Positionen eingesetzt werden, die auf diagonalen Linien eines Polygons als Referenzpunkte liegen, wobei das Polygon durch gerade Linien gebildet wird, die die zueinander benachbarten Befestigungslöcher (23) miteinander verbinden, oder durch gerade Linien, die benachbarte Eingriffsvorsprünge (24) unter Eingriffsvorsprüngen (24) für die Nabe (50) miteinander verbinden, die an einer inneren umlaufenden Oberfläche (22a), die das Nabenloch (22) bildet, vorgesehen sind.

11. Das TWA-Befestigungsverfahren nach einem der Ansprüche 8 bis 10, des Weiteren aufweisend die Schritte des Einsetzens einer Dickenmesslehre (400) in den Schlitz und nachfolgend Messen eines Maßes des Spaltes unter Verwendung der Dickenmesslehre (400), wobei im Schritt des Einsetzens des Abstandshalters (310) der Abstandshalter (310) eine Dicke aufweist, die im Wesentlichen der Hälfte des Maßes des Spaltes entspricht, der im Schritt des Einsetzens der Dickenmesslehre (400) gemessen wurde.

12. Das TWA-Befestigungsverfahren nach einem der Ansprüche 7 bis 11, wobei in der Art einer unterbrochenen Linie geschnittene Löcher (300a) am Abstandshalter (310) in einer Richtung ausgebildet sind, die eine Achse (A1) der Nabe (50) in einem Stadium, in dem der Abstandshalter (310) in den Spalt eingesteckt ist, schneidet, und die geschnittenen Löcher (300a) im Stadium, in dem der Abstandshalter (310) in den Spalt eingesetzt ist, zwischen einem oberen Ende der Nabe (50) und einer äußeren Oberfläche des Rades (20), das das Nabenloch (22) bildet, positioniert ist, wobei das Verfahren außerdem den Schritt des Abschneidens des Abstandshalters (310) entlang der geschnittenen Löcher umfasst.

13. Ein Reifen-/Radbefestigungsverfahren zum Befestigen einer Reifen-/Radanordnung (40) an einer Nabe (50) eines Fahrzeugs (10) zum Verringern von Vibrationen in Fahrzeugen durch Verwenden einer Befestigungsunterstützungsvorrichtung (500) und einer Vielzahl von Befestigungsvorrichtungen (200), wobei die Reifen-/Radanordnung (40) einen auf einem Rad (20) montierten Reifen (30) aufweist, wobei die Befestigungsunterstützungsvorrichtung (500) aufweist:
- einen vorrichtungsseitigen Verschraubungsteil (510), der ausgebildet ist, um mit einem nabenseitigen Verschraubungsteil (63), der in der Nabe (50) ausgebildet ist, verschraubt zu werden; und
- eine Radführungseinheit (520), die in Richtung einer Fahrzeugbreite außen von dem vorrichtungsseitigen Verschraubungsteil (510) ausgebildet ist, wobei der vorrichtungsseitige Verschraubungsteil (510) mit dem nabenseitigen Verschraubungsteil (63) verschraubt ist,
- wobei die Radführungseinheit (520) einen äußeren Durchmesser (Φ50) hat, mit dem die Radführungseinheit (520) auf einer inneren umlaufenden Oberfläche (23a) eines in dem Rad (20) ausgebildeten Befestigungslochs (23) für das Fahrzeug (10) verschiebbar ist,
- eine Achse (A3) des vorrichtungsseitigen Verschraubungsteils (510) und eine Achse (A4) der Radführungseinheit (520), die zusammenfallen,
- wobei eine Vielzahl von Befestigungsunterstützungsvorrichtungen (500) vorgesehen sind,
- wobei äußere Durchmesser der Radführungseinheiten (520) der Befestigungsunterstützungsvorrichtungen (500) voneinander verschieden sind,
wobei das Verfahren die folgenden Schritte umfasst:
- Messen eines Durchmessers des Befestigungslochs (23) unter Verwendung eines Messwerkzeugs (600); und
- Auswählen der Befestigungsunterstützungsvorrichtung (500) entsprechend dem Durchmesser des Befestigungslochs (23), der im Messschritt gemessen wurde,
- Verschrauben der Befestigungsunterstützungsvorrichtung (500) mit dem nabenseitigen Verschraubungsteil (63) in einem Stadium, in dem die Befestigungsunterstützungsvorrichtung (500) in mindestens eines der Befestigungslöcher (23) eingesetzt ist, die in dem Rad (20), das temporär an der Nabe (50) befestigt ist, ausgebildet sind,
- Verschrauben der Befestigungsvorrichtung (200) mit dem nabenseitigen Verschraubungsteil (63), der mit dem Befestigungsloch (23) korrespondiert, in dem keine Befestigungsunterstützungsvorrichtung (500) eingesetzt ist,
- Entfernen der Befestigungsunterstützungsvorrichtung (500) von der Nabe (50);
- Verschrauben der Befestigungsvorrichtung (200) mit dem Nabenseitigen Verschraubungsteil (63), aus dem die Befestigungsunterstützungsvorrichtung (500) entfernt wurde, und dann
- Befestigen der Reifen-/Radanordnung (40) an der Nabe (50).

14. Die Reifen-/Radanordnungsbefestigungsmethode nach Anspruch 13, wobei beim Schritt des Verschraubens der Befestigungsunterstützungsvorrichtung (500) mit dem nabenseitigen Verschraubungsteil (63) die Befestigungsunterstützungsvorrichtung (500) mit jeder einer Vielzahl von nabenseitigen Verschraubungsteilen (63) verschraubt wird.

15. Das Reifen-/Radanordnungsbefestigungsverfahren nach Anspruch 14, wobei die Befestigungsunterstützungsvorrichtungen (500) mit einer Vielzahl von nabenseitigen Verschraubungsteilen (63) verschraubt werden, die auf diagonalen Linien liegen, deren Mitte die Nabe (50) ist.

## Revendications

1. Système de fixation d'ensemble pneumatique/roue destiné à fixer un ensemble pneumatique/roue (40), désigné par la suite par ensemble TWA (tire/wheel assembly) (40), incluant un pneumatique (30) monté sur une roue (20) sur un moyeu (50) d'un véhicule (10) en utilisant un dispositif d'attache (200), le système de fixation d'ensemble TWA incluant un dispositif de support de fixation (100) monté sur la roue (20), dans lequel le dispositif de support de fixation (100) inclut :
- une partie de bague de moyeu annulaire (110) qui s'ajuste dans un trou de moyeu (22) formé dans une partie d'axe de rotation (21) de la roue (20) et dans laquelle le moyeu (50) est inséré, et
- une unité de guidage de moyeu (120) prévue au niveau d'une surface circonférentielle intérieure (110c) de la partie de bague de moyeu (110),
- l'unité de guidage de moyeu (120) incluant des pièces mobiles (121) qui sont sollicitées vers l'intérieur dans une direction radiale du moyeu (50), qui sont amenées en contact avec le moyeu (50) lorsque le moyeu (50) est inséré dans la partie de bague de moyeu (110), et sont ainsi mobiles vers l'extérieur dans la direction radiale,
- un premier diamètre (Φ11) formé par les pièces mobiles (121) dans un état dans lequel les pièces mobiles (121) ne sont pas en contact avec le moyeu (50), qui est inférieur au diamètre (Φ21) du moyeu (50),
- un deuxième diamètre (Φ12) pouvant être formé lorsque le diamètre formé par les pièces mobiles (121) est agrandi par le moyeu (50), qui est supérieur au diamètre du moyeu (50), et dans lequel le dispositif d'attache (200) inclut :
- une partie à vis côté dispositif (240) vissée sur une partie à vis côté moyeu (63) formée dans le moyeu (50),
- une partie de tête (210) étant continue par rapport à la partie à vis côté dispositif (240) et étant située vers l'extérieur de la partie à vis côté dispositif (240) dans une direction de la largeur d'un véhicule,
- une partie de fixation de roue (230) étant positionnée entre la partie à vis côté dispositif (240) et la partie de tête (210), et étant amenée en contact avec la périphérie d'un trou de montage (23) pour le véhicule, qui est formé dans la roue (20), et
- une partie de plaque coulissante (220) existant entre la partie de fixation de roue (230) et la partie de tête (210) et pouvant coulisser par rapport à la partie à vis côté dispositif (240) et la partie de fixation de roue (230), et
- la partie de fixation de roue (230) étant montée sur la partie à vis côté dispositif (240) de manière à pouvoir se déplacer dans une direction orthogonale à un axe (A10) de la partie à vis côté dispositif (240).

2. Système de fixation d'ensemble TWA selon la revendication 1, dans lequel la pièce mobile (121) inclut une partie élastique (121a) continue par rapport à la partie de bague de moyeu (110), la partie élastique (121a) étant située vers l'intérieur d'une surface circonférentielle intérieure de la partie de bague de moyeu (110) dans la direction radiale du moyeu (50), et sollicite la pièce mobile (121) vers l'intérieur dans la direction radiale du moyeu (50).

3. Système de fixation d'ensemble TWA selon la revendication 2, dans lequel une constante de rappel de la partie élastique (121a) se trouve entre 0,01 mm/10 kg et 0,01 mm/80 kg.

4. Système de fixation d'ensemble TWA selon l'une quelconque des revendications précédentes, dans lequel le premier diamètre (Φ11) est inférieur au diamètre minimal (Φ_{MIN}) y compris une tolérance du moyeu (50) de 0,1 à 0,2 mm.

5. Système de fixation d'ensemble TWA selon l'une quelconque des revendications précédentes, dans lequel le deuxième diamètre (Φ12) est supérieur au diamètre maximal (Φ_{MAX}) y compris une tolérance du moyeu (50) de 0,05 à 0,10 mm.

6. Système de fixation d'ensemble TWA selon l'une quelconque des revendications précédentes, dans lequel la partie de fixation de roue (230) inclut un trou d'insertion (230a) à travers lequel la partie à vis côté dispositif (240) est insérée, et un diamètre (Φ30) du trou d'insertion est plus grand qu'un diamètre extérieur (Φ40) de la partie à vis côté dispositif (240) de 0,06 mm à 0,15 mm.

7. Procédé de fixation d'ensemble pneumatique/roue destiné à fixer un ensemble pneumatique/roue (40), désigné par la suite par ensemble TWA (tire/wheel assembly) (40), incluant un pneumatique (30) monté sur une roue (20) sur un moyeu (50) d'un véhicule (10) en utilisant un dispositif d'attache (200), le procédé incluant les étapes consistant à :
- fixer temporairement l'ensemble TWA sur le moyeu dans un état dans lequel l'ensemble TWA est mobile,
- insérer un élément d'espacement semblable à une plaque mince (310) correspondant à une dimension d'un jeu formé entre un trou de moyeu (22) formé dans la roue (20), qui s'ajuste dans le moyeu (50), et le moyeu (50), et
- insérer le dispositif d'attache (200) dans un trou de montage (23) pour le véhicule, lequel est formé dans la roue (20), et ensuite fixer l'ensemble TWA au moyeu (50) par vissage du dispositif d'attache (200) sur une partie à vis côté moyeu (63) formée dans le moyeu (50).

8. Procédé de fixation d'ensemble TWA selon la revendication 7, dans lequel dans l'étape consistant à insérer l'élément d'espacement (310), une pluralité des éléments d'espacement (310) sont insérés à des positions différentes les unes des autres dans le jeu.

9. Procédé de fixation d'ensemble TWA selon la revendication 8, dans lequel dans l'étape consistant à insérer l'élément d'espacement (310), au moins trois éléments d'espacement (310) ou plus sont insérés.

10. Procédé de fixation d'ensemble TW selon la revendication 9, dans lequel dans l'étape consistant à insérer l'élément d'espacement (310), les éléments d'espacement (310) sont insérés en utilisant des positions sur des lignes diagonales d'un polygone comme points de référence, le polygone étant formé par des lignes droites reliant les trous de montage (23) adjacents les uns aux autres ou des lignes droites reliant des protubérances d'engagement (24) adjacentes les unes aux autres parmi des protubérances d'engagement (24) pour le moyeu (50), qui sont prévues sur une surface circonférentielle intérieure (22a) formant le trou de moyeu (22).

11. Procédé de fixation d'ensemble TWA selon l'une des revendications 8 à 10, incluant en outre l'étape consistant à insérer un calibre d'épaisseur (400) dans le jeu et à mesurer ensuite une dimension du jeu en utilisant le calibre d'épaisseur (400), dans lequel dans l'étape consistant à insérer l'élément d'espacement (310), l'élément d'espacement (310) présente une épaisseur sensiblement égale à la moitié de la dimension du jeu mesurée dans l'étape consistant à insérer le calibre d'épaisseur (400).

12. Procédé de fixation d'ensemble TWA selon l'une des revendications 7 à 11, dans lequel des trous de coupe en pointillés (300a) sont formés sur l'élément d'espacement (310) dans une direction coupant un axe (A1) du moyeu (50) dans un état dans lequel l'élément d'espacement (310) est inséré dans le jeu, et les trous de coupe (300a) sont positionnés entre une extrémité supérieure du moyeu (50) et une surface extérieure de la roue (20) formant le trou du moyeu (22) dans l'état dans lequel l'élément d'espacement (310) est inséré dans le jeu, le procédé incluant en outre l'étape consistant à couper l'élément d'espacement (310) le long des trous de coupe.

13. Procédé de fixation d'un ensemble pneumatique/roue destiné à fixer un ensemble pneumatique/roue (40) sur un moyeu (50) d'un véhicule (10) destiné à réduire des vibrations dans des véhicules en utilisant un dispositif de support de fixation (500) et une pluralité de dispositifs d'attache (200), l'ensemble pneumatique/roue (40) incluant un pneumatique (30) monté sur une roue (20), le dispositif de support de fixation (500) incluant :
- une partie à vis côté dispositif (510) configurée pour être vissée sur une partie à vis côté moyeu (63) formée dans le moyeu (50), et
- une unité de guidage de roue (520) formée à l'extérieur de la partie à vis côté dispositif (510) dans une direction de la largeur d'un véhicule avec la partie à vis côté dispositif (510) qui est vissée sur la partie à vis côté moyeu (63),
- l'unité de guidage de roue (520) ayant un diamètre extérieur (Φ50) avec lequel l'unité de guidage de roue (520) peut coulisser sur une surface circonférentielle intérieure (22a) d'un trou de montage (23) pour le véhicule (10), qui est formé dans la roue (20),
- un axe (A3) de la partie à vis côté dispositif (510) et un axe (A4) de l'unité de guidage de roue (520) coïncidant l'un avec l'autre,
- une pluralité des dispositifs de support de fixation (500) étant prévus, les diamètres extérieurs des unités de guidage de roue (520) des dispositifs de support de fixation (500) étant différents les uns des autres,
le procédé comprenant les étapes consistant à :
- mesurer un diamètre du trou de montage (23) en utilisant un outil de mesure (600), et
- sélectionner le dispositif de support de fixation (500) correspondant au diamètre du trou de montage (23) qui est mesuré dans l'étape de mesure,
- visser le dispositif de support de fixation (500) sur la partie à vis côté moyeu (63) dans un état dans lequel le dispositif de support de fixation (500) est inséré dans au moins un des trous montage (23) formés dans la roue (20) qui est temporairement fixée au moyeu (50),
- visser le dispositif d'attache (200) sur la partie à vis côté moyeu (63) correspondant au trou montage (23) n'ayant pas le dispositif de support de fixation (500) inséré dans celui-ci,
- retirer le dispositif de support de fixation (500) du moyeu (50),
- visser le dispositif d'attache (200) sur la partie à vis côté moyeu (63) de laquelle le dispositif de support de fixation (500) est retiré, et ensuite
- fixer l'ensemble pneumatique/roue (40) sur le moyeu (50).

14. Procédé de fixation d'ensemble pneumatique/roue selon la revendication 13, dans lequel le dispositif de support de fixation (500) est vissé sur chacune d'une pluralité des parties à vis côté moyeu (63) dans l'étape consistant à visser le dispositif de support de fixation (500) sur la partie à vis côté moyeu (63).

15. Procédé de fixation d'ensemble pneumatique/roue selon la revendication 14, dans lequel les dispositifs de support de fixation (500) sont vissés sur la pluralité de parties à vis côté moyeu (63) situées sur des lignes diagonales, le moyeu (50) étant au centre de la ligne.
